## Europäisches Patentamt

## European Patent Office

## Office européen des brevets

(19)

(11) **EP 1 217 778 B1**

(12)

# FASCICULE DE BREVET EUROPEEN

(45) Date de publication et mention
de la délivrance du brevet:
**09.03.2005 Bulletin 2005/10**

(51) Int Cl.$^7$: **H04L 1/18**

(21) Numéro de dépôt: **01460080.3**

(22) Date de dépôt: **20.12.2001**

(54) **Procédé et dispositif de communication de données avec demande de répétition automatique**

Datenübertragungsverfahren und Einrichtung mit automatischer Wiederholungsaufforderung

Data communication method and apparatus using automatic repeat request

(84) Etats contractants désignés:
**AT BE CH CY DE DK ES FI FR GB GR IE IT LI LU
MC NL PT SE TR**

(30) Priorité: **22.12.2000 FR 0017005**

(43) Date de publication de la demande:
**26.06.2002 Bulletin 2002/26**

(73) Titulaire: **Mitsubishi Electric ITE
35700 Rennes (FR)**

(72) Inventeur: **Rosier,Corinne
F-35830 Betton (FR)**

(74) Mandataire: **Vidon, Patrice
Cabinet Vidon
16 B, rue Jouanet - B.P. 90333
Technopole Atalante
35703 Rennes Cedex 7 (FR)**

(56) Documents cités:
**US-A- 5 872 777**

• **BROWN G M ET AL: "BLOCK
ACKNOWLEDGEMENT: REDESIGNING THE
WINDOW PROTOCOL" COMPUTER
COMMUNICATIONS REVIEW, ASSOCIATION
FOR COMPUTING MACHINERY. NEW YORK, US,
vol. 19, no. 4, 1 septembre 1989 (1989-09-01),
pages 128-135, XP000133117 ISSN: 0146-4833**

## Description

Le domaine de l'invention est celui de la transmission de données entre un émetteur et un récepteur. Plus précisément, l'invention concerne tous les systèmes de communication requérant une qualité de transmission de données élevée, et présente un intérêt particulier pour les systèmes de communication soumis à des contraintes de temps réel.

L'invention s'applique notamment, mais non exclusivement, aux protocoles de transmission du type ARQ (en anglais "Automatic Repeat Request"), qui mettent en oeuvre des fonctions de contrôle d'erreurs au sein des systèmes de communication. De tels protocoles ARQ définissent un ensemble de règles de transmission de données, organisées en trames successives, sous forme de paquets.

De nombreuses techniques de contrôle d'erreur sont généralement utilisées dans les systèmes de communication, pour compenser la perte et/ou la dégradation des données transmises d'un point source vers un point destination. De manière classique, le contrôle d'erreur met en oeuvre une détection des erreurs de transmission, et une retransmission des données perdues ou détériorées. Selon une technique connue de retransmission de données, l'émetteur attend de recevoir du récepteur un message de rejet explicite de données perdues, ou endommagées en cours de transmission, sous la forme d'un message d'acquittement retour, puis retransmet dès que possible les données non-acquittées par le récepteur.

L'invention s'applique notamment dans le cadre du protocole ARQ de détection d'erreurs et de retransmission du standard HiperLAN/2 (en anglais "High Performance Local Area Network" Type 2) défini par l'ETSI (en anglais "European Telecommunications Standards Institute", Institut Européen des Normes de Télécommunications) dans la norme ETSI TS 101 761-1 V1.1.1 (2000-04) intitulée en anglais "Broadband Radio Access Network (BRAN) ; HiperLAN Type 2 ; Data Link Control (DLC Layer) Part 1 : Basic Data Transport Functions" (pour "Réseau d'accès radio large bande ; HiperLAN type 2 ; Contrôle de liaison de données (couche DLC) Partie 1 : Fonctions de transport de données élémentaires").

Le standard de communication HiperLAN/2, encore appelé H/2, définit un système d'accès radio à haut débit et de faible portée, et s'applique avantageusement aux réseaux locaux sans fils, et aux réseaux d'accès sans fils. H/2 est un système cellulaire dans lequel chaque cellule radio est contrôlée par un point d'accès, appelé AP (en anglais "Access Point"), couvrant une zone géographique donnée, et gérant la répartition des ressources radio entre les différents terminaux mobiles (appelés MT, pour « mobile terminal » en anglais) du système. H/2 prévoit trois types de transmission, à savoir une transmission par voie montante (en anglais « uplink »), une transmission par voie descendante (en anglais « downlink »), et une transmission par voie directe (en anglais « direct link »).

Le protocole ARQ d'HiperLAN/2 est un protocole ARQ du type "Selective Repeat", présentant plusieurs mécanismes supplémentaires. On décrit par la suite le principe général d'un tel protocole.

Un identifiant, encore appelé numéro de séquence (en anglais "Sequence Number"), est inséré par l'émetteur ARQ dans chaque paquet de données utilisateur, encore appelé U-PDU (en anglais " User Protocol Data Unit"), transmis au récepteur ARQ. Cet identifiant est exprimé sur 10 bits, et est incrémenté de 1 modulo $2^{10}=1024$.

Dans la suite du document, on désignera par le terme PDU un paquet de données utilisateur de type U-PDU.

L'émetteur maintient une liste des numéros de séquence qu'il est autorisé à transmettre, et le récepteur maintient une liste des numéros de séquence qu'il est préparé à recevoir. Chacune de ces listes est conçue sous la forme d'une fenêtre de PDUs. Le numéro de séquence permet au récepteur de détecter une perte de PDU, ou la réception d'un PDU endommagé, et de le signaler à l'émetteur par un message d'acquittement en retour (en anglais "feedback message"). L'émetteur réalise alors une retransmission des PDUs qui ont été mal reçus par le récepteur.

Une fenêtre de PDUs est caractérisée par la variable BoW (en anglais "Bottom of Window" pour "bas de fenêtre") d'une part, et par sa taille $K_s$ d'autre part.

Du côté de l'émetteur, BoW est le plus petit numéro de séquence associé à un PDU qui n'a pas encore été positivement acquitté par le récepteur. $K_s$ représente alors le nombre maximum de PDUs qui peuvent être envoyés et stockés dans la fenêtre en attente d'un acquittement.

Du côté du récepteur, BoW est le plus petit numéro de séquence associé à un PDU qui n'a pas encore été correctement reçu par le récepteur. $K_s$ représente alors le nombre maximum de PDUs qui peuvent être acceptés et stockés dans la fenêtre de réception, avant transmission d'un de ces PDUs vers une couche supérieure.

En plus du numéro de séquence, le récepteur ou l'émetteur ARQ maintient une variable d'état d'acquittement pour chaque PDU de la fenêtre, cette variable indiquant si le PDU a été bien ou mal reçu.

Dans le protocole ARQ d'HiperLAN/2, chaque paquet de données, ou PDU, d'une fenêtre de réception est acquitté de manière sélective au sein d'un bloc d'acquittement (en anglais "bitmap block"), ou par un message d'acquittement cumulé si tous les PDUs précédant ou entourant le PDU considéré dans la fenêtre, y compris le PDU considéré lui-même, ont été correctement reçus.

Un tel bloc d'acquittement est associé à un nombre prédéterminé de PDUs (8 dans le cas d'HiperLAN/2) présentant des numéros de séquence consécutifs. Une telle association est réalisée de la manière suivante : l'espace des numéros de séquence, commençant au numéro de séquence 0, est découpé en intervalles de numéros de séquence consécutifs, chaque intervalle étant associé à un bloc d'acquittement déterminé. Un bit de position donnée au sein d'un bloc d'acquittement est associé au numéro de séquence ayant la même position au sein de l'intervalle des numéros de séquence associé. Ainsi, un bit de valeur 1 au sein d'un bloc d'acquittement indique que le PDU, dont le numéro de séquence est associé au bit considéré, est acquitté de façon positive. Inversement, un bit de valeur 0 au sein d'un bloc d'acquittement signale un acquittement négatif du PDU correspondant.

Le numéro d'un bloc d'acquittement correspond à la position qu'occupe l'intervalle des numéros de séquence auquel il est associé, au sein de l'espace des numéros de séquence. Un message d'acquittement peut véhiculer jusqu'à trois blocs d'acquittement distincts.

Le lien ARQ établi entre l'émetteur et le récepteur est par ailleurs caractérisé par la durée totale d'un cycle d'opération, encore appelée RTT (en anglais "Round Trip Time"). La durée RTT peut être définie comme la somme du temps nécessaire à l'émetteur ARQ pour envoyer un PDU, du temps nécessaire au récepteur ARQ pour le recevoir, le traiter, et envoyer une réponse à l'émetteur sous la forme d'un message d'acquittement (positif ou négatif), et du temps nécessaire à l'émetteur pour analyser ce message d'acquittement et en extraire la réponse du récepteur relative au PDU considéré.

Dans le cadre d'HiperLAN/2, la réponse du récepteur relative à l'acquittement d'un PDU reçu peut être retardée jusqu'à ce qu'un certain nombre de PDUs aient été reçus, ou peut être retardée involontairement par le récepteur si aucune ressource n'est disponible pour la transmettre. La durée RTT, pour un lien ARQ donné, est donc variable.

Cette durée RTT dépend encore de la classe ARQ de l'émetteur et du récepteur du lien ARQ considéré. On rappelle que le délai de traitement ARQ d'un émetteur est égal au nombre minimum de trames s'écoulant avant que l'émetteur ne puisse transmettre des PDUs en réponse à la réception d'un message d'acquittement du récepteur. De même, le délai de traitement ARQ d'un récepteur est égal au nombre minimum de trames s'écoulant avant que le récepteur ne puisse transmettre un message d'acquittement en réponse à la réception d'un ou plusieurs PDUs. Les classes de délai ARQ définies dans HiperLAN/2, de valeur 0, 1, 2 ou 3, ont une incidence directe sur les délais de traitement d'une entité ARQ donnée (en transmission et en réception). Les délais sont de valeur identique à celle de la classe.

Par ailleurs, chaque entité ARQ annonce sa classe ARQ en émission et en réception pendant la période dite d'association, au sein du réseau H/2. De cette façon, chaque entité ARQ, de part et d'autre d'un chemin de transmission, peut déterminer la valeur minimale de RTT probable, ainsi que la limite supérieure de RTT qui ne devrait pas être atteinte en situation normale.

Un inconvénient de la plupart des techniques connues de transmission de données mettant en oeuvre une retransmission des données perdues ou détériorées sur acquittement explicite, est qu'elles ne proposent pas de solutions adaptées, en cas de perte ou de détérioration d'un message d'acquittement.

En effet, lorsqu'un message d'acquittement est perdu ou détérioré, l'émetteur n'a pas connaissance des PDUs qu'il doit retransmettre. Il doit donc attendre de recevoir correctement un nouveau message d'acquittement, en remplacement du message perdu, contenant tout ou partie des données d'acquittement du message perdu, pour mettre en oeuvre le mécanisme de retransmission des données non-acquittées.

Si, de plus, le protocole d'échange de données ne permet pas à l'émetteur de requérir un message ou un bloc particulier d'acquittement, comme c'est le cas par exemple dans le protocole ARQ d'HiperLAN/2, l'émetteur n'est pas en mesure de prédire l'instant où il recevra le message d'acquittement attendu.

Cet inconvénient peut s'avérer problématique lorsque le contenu du message d'acquittement est de grande importance pour l'émetteur, notamment si le message d'acquittement contient des informations nécessaires à l'émetteur pour faire avancer la fenêtre des PDUs à transmettre.

Pour certaines applications nécessitant une vitesse de transmission de données élevée, et notamment pour les applications soumises à des contraintes temps réel, l'émetteur peut prendre la décision, en cas de non réception ou de réception tardive d'un message d'acquittement, de ne pas retransmettre les PDUs non-acquittés. Ce phénomène de rejet (en anglais "discard") a notamment pour objectif d'éviter à l'émetteur de retransmettre des données qui seraient inutiles pour le récepteur, car reçues trop tardivement pour être prises en compte.

Inversement, toujours dans le cadre d'une transmission radio sensible au délai par exemple, une retransmission tardive de PDUs précédemment mal reçus peut également entraîner la mise en oeuvre d'un mécanisme de "discard" de la part, cette fois, du récepteur.

Une telle perte de données, au niveau du récepteur, implique une dégradation de la qualité de l'application mise en oeuvre à la réception, en particulier lorsque cette application est particulièrement sensible à la perte autant qu'au retard des données.

Un autre inconvénient de certaines techniques de l'art antérieur, et notamment du protocole ARQ d'HiperLAN/ 2, est qu'elles ne proposent pas de solution pour faire face à d'éventuelles inconsistances de fonctionnement dans le récepteur. Ainsi, selon le standard H/2, la manière dont le récepteur émet des messages d'acquittement retour (en anglais "feedback messages"), et le choix de leur contenu (notamment le choix des blocs d'acquittement qu'ils contiennent) n'étant pas normalisé, certains blocs d'acquittement peuvent être émis dans un temps très long, et même, dans le pire des cas, ne jamais être émis.

Le document US 5, 872, 777 propose une technique de transmission de données par paquets visant à résoudre les différents problèmes afférents à la perte de messages d'acquittement, ou au retard à l'émission de tels messages. Selon cette technique, on associe un temporisateur à un groupe de paquets de données émis. Sur expiration de ce temporisateur, et à défaut d'avoir reçu un message d'acquittement du récepteur, l'émetteur détermine que les groupes de paquets associés au temporisateur doivent être retransmis. Afin que cette technique ne soit pas trop consommatrice en ressources, le document US 5, 872, 777 prévoit d'éviter d'associer un identifiant à chacun des groupes de paquets transmis par l'émetteur, ce qui permet aussi d'éviter de répéter cet identifiant dans un message d'acquittement correspondant.

Un inconvénient de cette technique de l'art antérieur est qu'elle nécessite la gestion d'une base de données complexe, côté émetteur, dans laquelle sont stockés en correspondance des identifiants de groupes, pour les groupes de paquets de données envoyés par l'émetteur, et les numéros de séquence des paquets de données du groupe.

La gestion dynamique d'une telle table de correspondance peut se révéler coûteuse en termes d'occupation de mémoire, ainsi que de temps de traitement ou d'accès.

Cette technique a aussi pour inconvénient de nécessiter, côté émetteur, une analyse complexe des messages d'acquittement reçus, pour déterminer à quels groupes de paquet de données ils correspondent. En outre, des tests montrent que le résultat de cette analyse est parfois entaché d'incertitude.

L'invention a notamment pour objectif de pallier ces inconvénients de l'art antérieur.

Plus précisément, un objectif de l'invention est de fournir une technique de transmission de données, mettant en oeuvre une détection d'erreurs et une retransmission des données perdues ou endommagées, offrant une solution optimisée au problème de la perte ou de la détérioration d'un message d'acquittement.

L'invention a également pour objectif de mettre en oeuvre une technique de transmission de données permettant de pallier aux inconvénients des techniques de l'art antérieur selon lesquelles, d'une part, l'émetteur peut être confronté à la perte de messages d'acquittement ou à d'éventuelles inconsistances de fonctionnement du récepteur, et, d'autre part, l'émetteur ne dispose pas de moyens spécifiques pour requérir un message ou un bloc d'acquittement particulier.

L'invention a aussi pour objectif de fournir une telle technique de transmission de données, qui ne nécessite aucune mise en oeuvre, côté émetteur, d'une base de données destinée à gérer des identifiants de groupe et des numéros de séquence de paquets associés à ces identifiants.

Un autre objectif de l'invention est de mettre en oeuvre une technique de transmission de données adaptée notamment, mais non exclusivement, au protocole ARQ, en particulier pour le standard HiperLAN/2.

L'invention a encore pour objectif de fournir une technique de transmission de données permettant une retransmission anticipée de paquets de données non-acquittés, en cas de perte ou de détérioration d'un message d'acquittement.

L'invention a également pour objectif de mettre en oeuvre une technique de communication entre un émetteur et un récepteur présentant une qualité de transmission élevée.

L'invention a encore pour objectif, dans le cadre des protocoles de type ARQ, d'éviter une mise en oeuvre intempestive du mécanisme de rejet (en anglais "discard") prévu notamment par le standard HiperLAN/2.

Ces objectifs, ainsi que d'autres qui apparaîtront par la suite, sont atteints à l'aide d'un procédé de transmission de données entre au moins un émetteur et au moins un récepteur, sous forme de paquets d'au moins une donnée, chacun desdits paquets de données étant associé à un identifiant dudit paquet, ledit récepteur envoyant périodiquement audit émetteur un message d'acquittement, comprenant au moins un bloc d'acquittement associé à un nombre prédéterminé de paquets de données présentant des identifiants consécutifs, de manière à indiquer audit émetteur, de façon sélective, un état d'acquittement (acquitté ou non-acquitté) de chacun desdits paquets de données dudit bloc.

Selon l'invention, un tel procédé de transmission comprend au moins une étape d'association d'au moins un temporisateur à au moins certains desdits blocs d'acquittement, déterminant une durée de temporisation au delà de laquelle une opération spécifique devra être effectuée, si un acquittement n'a pas été reçu.

Selon l'invention, un tel procédé de transmission comprend en outre au moins une étape d'horodatage, consistant à associer un horodateur à au moins certains paquets de données dans ledit état non-acquitté.

Ainsi, l'invention repose sur une approche tout à fait nouvelle et inventive de la retransmission de données, dans le cadre d'un protocole de communication reposant sur la détection d'erreurs et la retransmission de données perdues ou endommagées. En effet, le principe des protocoles de transmission classiques repose sur la mise en oeuvre d'un mécanisme de retransmission de données en réponse à la réception d'un message d'acquittement en retour (en anglais "feedback message") indiquant que certains PDUs n'ont pas été correctement reçus. Selon l'invention, l'association d'un temporisateur à certains blocs d'acquittement (en anglais "bitmap blocks") permet de mettre en oeuvre une retransmission anticipée des données, préalablement à la réception d'un message d'acquittement correspondant.

On notera qu'un bloc d'acquittement est associé à un nombre prédéterminé de paquets de données, qui peut être fixe ou variable, mais connu de l'émetteur pendant toute la durée de sa communication avec le récepteur.

L'association d'un temporisateur à un bloc d'acquittement apparaît clairement comme un mécanisme consommateur de ressources, mais permet avantageusement d'améliorer la qualité du service fourni en réception. L'invention va donc à l'encontre des préjugés de l'homme du métier, pour qui la qualité du service fourni est liée à la maximisation du débit de transmission des données, et pour qui les ressources d'un système de communication doivent donc être économisées.

Un horodateur selon l'invention peut être exprimé en trames, ou en tout autre unité de mesure du temps, et notamment en millisecondes. Dans le cadre du protocole ARQ d'H/2, où les trames sont de durée fixée à 2ms, l'expression de la valeur d'un horodateur en millisecondes permet une meilleure précision, par rapport à l'expression de la mesure en trames.

Avantageusement, pour un bloc d'acquittement donné, un tel procédé comprend une première étape d'activation dudit temporisateur, lorsque ledit émetteur envoie audit récepteur le premier desdits paquets de données d'identifiants consécutifs associés audit bloc, de façon que ledit temporisateur passe dans ledit état activé.

Le déclenchement du temporisateur associé à un bloc d'acquittement donné se produit donc dès l'envoi du premier des PDUs associés à ce bloc, c'est-à-dire lors de l'envoi du PDU du bloc, présentant le plus petit numéro de séquence.

Selon une caractéristique avantageuse de l'invention, pour un bloc d'acquittement donné, un tel procédé comprend une première étape de désactivation dudit temporisateur après une durée maximale prédéterminée, et lesdits paquets de données dudit bloc sont alors considérés par ledit émetteur dans ledit état non-acquitté.

Dans le cadre du protocole ARQ d'H/2, une telle durée maximale prédéterminée correspond à la durée maximale d'un cycle de transmission RTTmax (en anglais "Round Trip Time"). Ainsi, lorsque le temporisateur indique qu'il s'est écoulé une durée supérieure ou égale à RTTmax depuis l'émission du premier PDU associé au bloc, et lorsque aucun message d'acquittement correspondant n'a été reçu pour ce bloc, l'émetteur considère alors qu'il peut s'être produit une erreur de transmission, et que les PDUs correspondants sont a priori non-acquittés. La désactivation du temporisateur se produit de manière automatique, à expiration de RTTmax.

Selon une deuxième caractéristique avantageuse de l'invention, pour un bloc d'acquittement donné, un tel procédé comprend une deuxième étape de désactivation dudit temporisateur lorsque ledit émetteur reçoit un acquittement cumulé d'au moins lesdits paquets de données dudit bloc, indiquant que lesdits paquets de données dudit bloc sont dans ledit état acquitté.

Ainsi, si par exemple le récepteur envoie un message d'acquittement indiquant que tous les PDUs de numéros de séquence compris entre 0 et 10 ont été correctement reçus, sur réception de ce message d'acquittement cumulé par l'émetteur, le temporisateur associé au bloc d'acquittement 0, correspondant aux PDUs 0 à 7, est alors désactivé.

Selon une troisième caractéristique avantageuse de l'invention, pour un bloc d'acquittement donné, un tel procédé comprend une troisième étape de désactivation dudit temporisateur, lorsque ledit émetteur reçoit un message d'acquittement comprenant au moins ledit bloc d'acquittement.

Préférentiellement, à la réception par l'émetteur dudit message d'acquittement, un tel procédé met en oeuvre une étape d'analyse dudit message d'acquittement, de manière à déterminer ledit état acquitté ou non-acquitté de chacun desdits paquets de données dudit bloc.

Dans le cadre du protocole ARQ d'H/2, si un tel message d'acquittement comprend par exemple un unique bloc d'acquittement, l'émetteur entreprend alors de lire les valeurs 0 ou 1 des 8 bits constitutifs de ce bloc. Un bit de valeur 0 indique que le PDU dont le numéro de séquence est égal à la position de ce bit est dans l'état non-acquitté.

Dans le cadre d'un protocole ARQ, lors d'une telle étape d'analyse d'un bloc d'acquittement, l'émetteur ne considère que les PDUs dont le numéro de séquence est compris dans la fenêtre courante de transmission, c'est-à-dire compris entre BoW et BoW + $K_s$, selon les notations utilisées précédemment dans ce document.

Avantageusement, à l'issue d'une desdites étapes de désactivation dudit temporisateur, au moins un paquet de données dudit bloc étant dans ledit état non-acquitté, il met en oeuvre une étape de positionnement d'au moins certains desdits paquets de données non-acquittés dudit bloc dans une file d'attente de retransmission.

Une telle file d'attente de retransmission peut être une file d'attente physique, sous la forme par exemple d'un buffer (en français, mémoire tampon) dans lequel sont stockés les PDUs en attente de retransmission. Le positionnement d'un PDU dans la file d'attente peut aussi consister à lui associer un drapeau de retransmission, qui est dans l'état levé lorsque le PDU doit être retransmis, et dans l'état baissé sinon. Plus généralement, le positionnement d'un PDU dans la file d'attente de retransmission peut consister à indiquer qu'il est dans un état spécifique précédant une retransmission par toute technique adéquate.

Ainsi que décrit précédemment, les PDUs associés à un bit de valeur 0 dans le bloc d'acquittement reçu, mais dont le numéro de séquence est supérieur à BoW + $K_s$, encore appelée EoW (en anglais "End of Window" pour "fin de fenêtre") ne sont pas pris en compte au cours de l'étape d'analyse du message d'acquittement, et ne sont donc pas positionnés dans la file d'attente de retransmission.

Selon une variante de réalisation avantageuse de l'invention, à l'issue de ladite étape d'analyse, un tel procédé met en oeuvre une étape de contrôle de la présence, dans ladite file d'attente de retransmission, d'au moins un paquet de données acquitté dudit bloc, et, lorsque la présence dans ladite file d'attente d'au moins un paquet de données acquitté dudit bloc est confirmée, il met en oeuvre une étape de suppression dudit ou desdits paquets de données acquittés dudit bloc de ladite file d'attente de retransmission.

De cette façon, on évite une retransmission inutile de PDUs acquittés positivement. Une telle technique est particulièrement intéressante lorsque, par exemple, un temporisateur a expiré après une durée RTTmax, que certains PDUs du bloc correspondant ont été préparés pour une retransmission, et qu'un message d'acquittement, acquittant positivement certains des PDUs prêts à être retransmis, est ensuite reçu par l'émetteur, avant que celui-ci n'ait pu effectuer la retransmission des PDUs placés en file d'attente. L'émetteur peut alors décider de retirer de la file d'attente les PDUs qui ont été acquittés positivement par le récepteur.

Selon une technique avantageuse de l'invention, un tel procédé met en oeuvre au moins une étape de retransmission dudit ou desdits paquets de données dudit bloc positionnés dans ladite file d'attente de retransmission, et une deuxième étape d'activation dudit temporisateur dudit bloc lors de la retransmission du premier desdits paquets de données dudit bloc positionnés dans ladite file d'attente.

On retransmet donc les PDUs de la file d'attente qui n'ont pas été acquittés par le récepteur, et on déclenche à nouveau le temporisateur lorsqu'on retransmet le PDU de plus petit numéro de séquence du bloc associé.

Préférentiellement, un tel procédé de transmission met en oeuvre un protocole de type ARQ (en anglais "Automatic Repeat Request").

Un tel protocole ARQ peut être par exemple de type "Selective Repeat", ou "Go Back N". L'invention s'applique notamment dans le cadre du protocole ARQ SRPB (en anglais "Selective Repeat with Partial Bitmap") du standard HiperLAN/2.

De manière préférentielle, ledit horodateur est activé lorsque ledit émetteur envoie ledit paquet de données associé.

Ainsi, l'horodateur permet d'évaluer, à tout instant, la durée qui s'est écoulée depuis l'émission d'un PDU.

Selon une autre technique avantageuse de l'invention, ladite étape de positionnement comprend une sous-étape préliminaire de sélection des paquets de données à positionner dans ladite file d'attente, en fonction d'au moins un critère de sélection prédéterminé.

Préférentiellement, ledit critère de sélection tient compte d'au moins une des informations appartenant au groupe comprenant :

- la valeur dudit horodateur associé à un paquet de données non-acquitté dudit bloc ;
- la classe ARQ dudit récepteur.

En effet, la valeur d'un horodateur et la classe ARQ du récepteur sont des indicateurs, respectivement, de la durée qui s'est écoulée depuis l'émission du PDU correspondant, et de la durée nécessaire au récepteur pour traiter le PDU et émettre un message d'acquittement correspondant. En prenant en compte l'un ou l'autre de ces deux critères, ou ces deux critères conjointement, l'émetteur peut prendre une décision fine sur la nécessité ou non de positionner le PDU considéré dans une file d'attente de retransmission.

Selon un mode de réalisation particulier de l'invention, ladite sous-étape de sélection permet de sélectionner ledit ou lesdits paquets de données non-acquittés dudit bloc, associés à un horodateur de valeur supérieure à ladite durée maximale prédéterminée.

En effet, si un horodateur indique que le PDU considéré a été émis depuis une durée supérieure à RTTmax, l'absence de message d'acquittement correspondant peut être assimilé par l'émetteur à une erreur de transmission probable.

Avantageusement, ladite étape de positionnement comprend en outre, pour chacun desdits paquets de données sélectionnés, une sous-étape de désactivation dudit horodateur associé.

Dès qu'un PDU est placé dans la file d'attente de retransmission, son horodateur est ainsi désactivé.

Selon un premier mode de réalisation préféré de l'invention, lorsque tous les paquets de données non-acquittés dudit bloc ont été sélectionnés dans ladite sous-étape de sélection, ledit temporisateur prend, lors de ladite deuxième étape d'activation, la valeur V(T) suivante :

$$V(T) = t(\text{activation}) + d_{max},$$

où t(activation) est la valeur temporelle courante lors de ladite deuxième étape d'activation, et où $d_{max}$ est ladite durée maximale prédéterminée, et l'horodateur associé à chaque paquet de données du bloc positionné dans ladite file d'attente est activé et prend la valeur temporelle courante lors de ladite retransmission dudit paquet de données.

La durée $d_{max}$, encore notée RTTmax, peut être exprimée en trames ou, par exemple en millisecondes. Dans le premier cas, et pour des trames de durée 2ms par exemple, l'équation ci-dessus s'écrit alors : V(T) = t(activation) + $d_{max}$ * 2, avec V(T) et t(activation) exprimés en millisecondes,

Selon un deuxième mode de réalisation préféré de l'invention, à l'issue de ladite première étape de désactivation dudit temporisateur, si au moins un paquet de données non-acquitté dudit bloc, associé à un horodateur de valeur inférieure à ladite durée maximale prédéterminée, n'a pas été sélectionné au cours de ladite sous-étape de sélection, un tel procédé de transmission met en oeuvre une troisième étape d'activation dudit temporisateur dudit bloc, de façon que ledit temporisateur prenne la valeur V(T) suivante :

$$V(T) = V(passage) + (Horodateur[i] - Horodateur[j]),$$

où V(passage) est la valeur dudit temporisateur lors de ladite étape de passage dudit temporisateur dans ledit état désactivé, Horodateur[j] est la plus grande des valeurs desdits horodateurs associés auxdits paquets de données non-acquittés dudit bloc sélectionnés au cours de ladite sous-étape de sélection, et Horodateur[i] est la plus grande des valeurs desdits horodateurs associés auxdits paquets de données non-acquittés dudit bloc n'ayant pas été sélectionnés au cours de ladite sous-étape de sélection.

Ainsi, à l'expiration d'un temporisateur, si au moins un PDU du bloc, transmis mais non encore acquitté, n'est pas concerné par la retransmission, parce que son horodateur est de valeur trop faible, on réactive immédiatement le temporisateur selon l'équation ci-dessus. Une telle équation peut encore s'écrire V(T) = V(passage) + (Horodateur[i] - Horodateur[j]) * 2 lorsque la valeur des horodateurs est exprimée en trames, et que ces trames sont de durée égale à 2ms. V(T) et V(passage) sont alors exprimés en millisecondes.

Dans le cas où plusieurs PDUs présenteraient la même valeur d'horodateur Horodateur[i] ou Horodateur[j], on peut envisager de choisir l'une quelconque de ces valeurs dans l'équation ci-dessus.

Avantageusement, à l'issue de ladite étape d'analyse dudit message d'acquittement, ledit procédé met en oeuvre, pour chacun desdits paquets de données acquittés dudit bloc, une étape de désactivation dudit horodateur associé.

Selon un troisième mode de réalisation préféré de l'invention, à l'issue de ladite troisième étape de désactivation dudit temporisateur, si au moins un paquet de données non-acquitté dudit bloc n'a pas été sélectionné au cours de ladite sous-étape de sélection en fonction d'un critère de décision lié à la classe ARQ dudit récepteur, un tel procédé de transmission met en oeuvre une quatrième étape d'activation dudit temporisateur dudit bloc, de façon que ledit temporisateur prenne la valeur V(T) suivante :

$$V(T) = V(passage) + (d_{max} - (t - Horodateur[i])),$$

où V(passage) est la valeur dudit temporisateur lors de ladite étape de passage dudit temporisateur dans ledit état désactivé, $d_{max}$ est ladite durée maximale prédéterminée, t est la valeur temporelle courante, et Horodateur[i] est ia plus grande des valeurs desdits horodateurs associés auxdits paquets de données non-acquittés dudit bloc n'ayant pas été sélectionnés au cours de ladite sous-étape de sélection.

Comme décrit précédemment, l'équation ci-dessus peut aussi s'écrire :

V(T) = V(passage) + ($d_{max}$ * 2 - (t - Horodateur[i])) lorsque $d_{max}$ est exprimée en trames, une trame étant de durée égale à 2ms, et que t et Horodateur[i] sont exprimés en millisecondes. L'équation peut encore s'écrire V(T) = V(passage) + ($d_{max}$ - (t - Horodateur[i])) * 2 si $d_{max}$ et Horodateur[i] sont exprimés en trames de durée 2ms, et si t désigne le numéro de trame courant.

Si plusieurs PDUs présentent la même valeur d'horodateur, on peut choisir l'une quelconque de ces valeurs dans l'équation ci-dessus.

L'invention concerne également un émetteur, un récepteur, et un système de transmission de données mettant en oeuvre le procédé de transmission de données décrit précédemment.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique des différentes étapes mises en oeuvre selon le mécanisme de base de l'invention dans le cadre d'échanges de paquets de données entre un émetteur et un récepteur ARQ ;
- la figure 2 illustre les échanges de PDUs entre un émetteur et un récepteur ARQ, lorsqu'on associe un temporisateur à chacun des blocs d'acquittement (en anglais "bitmap block") selon le procédé de la figure 1 ;
- la figure 3 illustre un perfectionnement du mode de réalisation de la figure 2, selon lequel on associe un horodateur aux PDUs non-acquittés échangés entre l'émetteur et le récepteur ARQ ;
- les figures 4a et 4b décrivent des échanges de PDUs entre un émetteur ARQ et un récepteur ARQ selon un mode de réalisation similaire à celui de la figure 3, avec une valeur RTTmax, qui correspond à la durée maximale d'un cycle d'opération, différente ;
- la figure 5 illustre un exemple de transmission de PDUs entre un émetteur de classe ARQ 0 et un récepteur de classe ARQ 1, selon un mode de réalisation similaire à celui des figures 3 et 4.

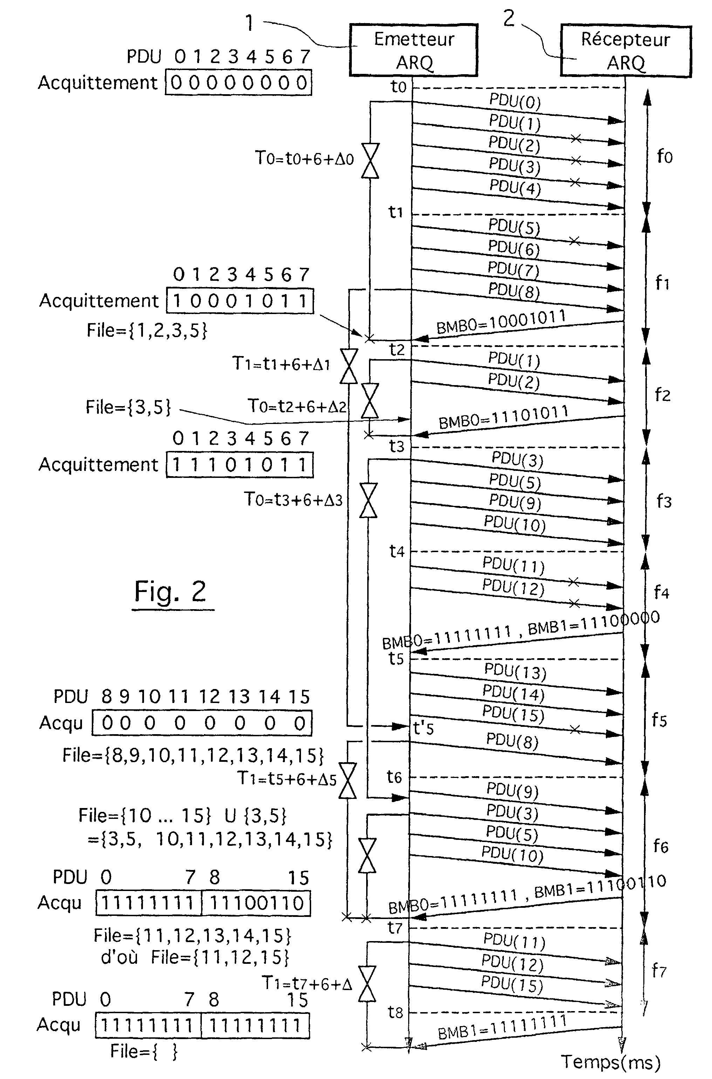

On notera que les figures 2 à 4 peuvent illustrer le cas particulier d'un émetteur ARQ situé dans le point d'accès AP, et d'un récepteur situé dans un terminal mobile (MT). Si l'on considère une communication entre deux terminaux en mode direct, dans laquelle les deux terminaux émettent alors durant la même phase, les figures 2 à 4 peuvent encore illustrer le cas particulier où le premier terminal émettant dans la trame constitue l'émetteur ARQ et où le second terminal émettant dans la trame constitue le récepteur ARQ pour la communication considérée.

Le principe général de l'invention repose sur l'association d'un temporisateur à au moins certains blocs d'acquittement (en anglais "bit map block") transmis par le récepteur à l'émetteur.

On s'attache, dans la suite du document, à décrire un mode de réalisation de l'invention dans le cadre du protocole ARQ SRPB (en anglais "Selective Repeat with Partial Bitmap") du standard HiperLAN/2. On rappelle que l'invention s'applique bien sûr également à d'autres types de protocoles de transmission de données, reposant sur une détection d'erreurs à la transmission et sur une retransmission des données perdues ou endommagées.

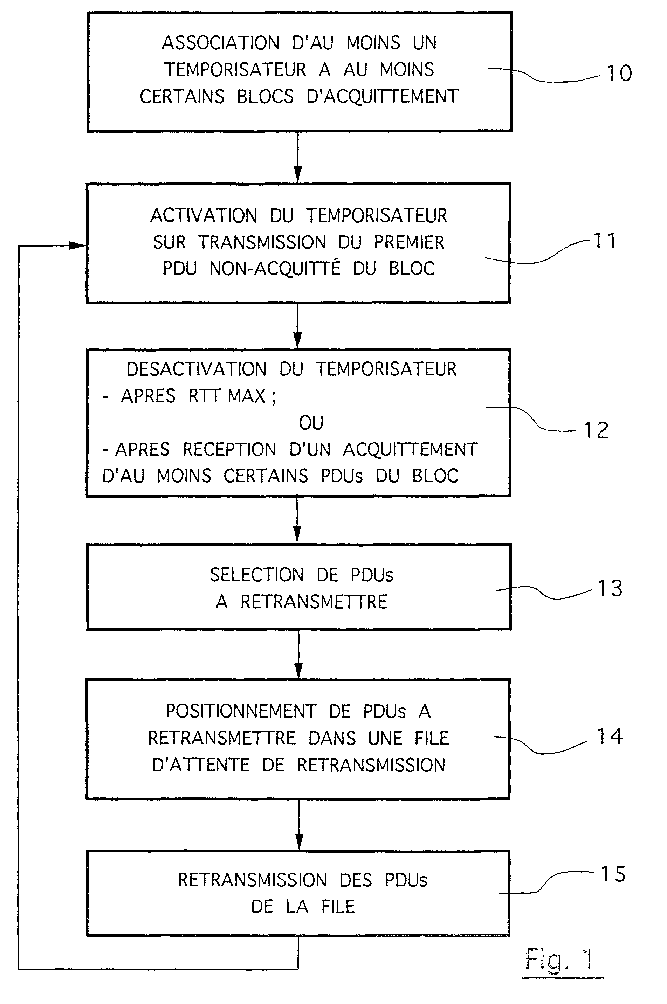

On décrit succinctement, en relation avec la figure 1, les différentes étapes mises en oeuvre selon le mécanisme de base de l'invention, dans le cadre d'échanges de PDUs entre un émetteur et un récepteur ARQ. Ces étapes seront décrites plus en détails en relation avec les figures 2 à 5.

Au cours d'une étape référencée 10, on associe, selon le procédé de la présente invention, au moins un temporisateur à certains ou tous les blocs d'acquittement, encore appelés en anglais "bitmap blocks", qu'un récepteur ARQ est susceptible de transmettre à un émetteur ARQ, au sein d'un message d'acquittement. Un tel bloc d'acquittement est associé, selon le protocole ARQ du standard HiperLAN/2, à 8 PDUs consécutifs, et permet d'acquitter sélectivement chacun de ces PDUs.

Le temporisateur est activé au cours d'une étape référencée 11, lors de la transmission du premier des PDUs consécutifs associés au bloc considéré. Il est ensuite désactivé au cours d'une étape ultérieure référencée 12, après expiration d'une durée maximale prédéterminée ou à la réception d'un acquittement d'au moins certains des PDUs du bloc considéré.

A la désactivation du temporisateur, l'émetteur ARQ met en oeuvre une étape 13 de sélection du ou des éventuels PDUs non-acquittés qu'il faut retransmettre au récepteur ARQ, puis positionne (14) les PDUs sélectionnés dans une file d'attente de retransmission.

Lors de la retransmission (15) du premier PDU du bloc auquel est associé le temporisateur, positionné dans la file d'attente, le temporisateur correspondant est réactivé (11).

On présente désormais, en relation avec la figure 2, un mode de réalisation de la gestion de temporisateurs associés aux blocs d'acquittement envoyés par le récepteur, dans le cadre d'échanges de PDUs entre un émetteur 1 et un récepteur 2.

Les échanges de PDUs sont organisés en trames, notées $f_0$ à $f_7$ sur la figure 2. Selon le protocole ARQ du standard HiperLAN/2, ces trames sont de durée égale à 2 ms.

On considère que l'émetteur et le récepteur de la figure 2 sont de classe ARQ égale à 0, c'est-à-dire que :

- l'émetteur ARQ, après réception en trame $f_i$ d'un message indiquant l'état d'acquittement de plusieurs PDUs, est capable de retransmettre dans la même trame $f_i$ (ou dans la trame consécutive selon que sa phase d'émission se situe avant ou après celle du récepteur) le ou les PDUs non-acquittés, à condition qu'il dispose des ressources nécessaires ;
- le récepteur ARQ, après réception d'un ou plusieurs PDUs en trame $f_i$, est capable de transmettre à l'émetteur, dans la même trame $f_i$, (ou dans la trame consécutive selon que sa phase d'émission se situe avant ou après celle de l'émetteur) un (ou plusieurs) message d'acquittement pour le ou les PDUs reçus s'il dispose des ressources nécessaires.

On considère en outre que la durée maximale d'un cycle d'opération, appelée par la suite RTTmax (en anglais "Round Trip Time"), est égale à 3 trames.

On s'intéresse tout d'abord au bloc d'acquittement associé aux PDUs de numéros de séquence 0 à 7, qu'on notera par la suite $BMB_0$ (de l'anglais "bitmap block"). A l'instant $t_0$, correspondant au début de la trame $f_0$, la valeur de $BMB_0$ est 00000000, indiquant que les PDUs de numéro de séquence 0 à 7 sont tous dans l'état non-acquitté. Selon l'invention, on associe un temporisateur $T_0$ à $BMB_0$.

En trame $f_0$, l'émetteur 1 envoie les PDUs de numéro de séquence 0 à 4 au récepteur 2. Le temporisateur

$T_0$ est activé à l'instant $t_0 + \Delta_0$, lors de l'émission du PDU de numéro de séquence 0, noté PDU(0). Il sera désactivé au plus tard après une durée RTTmax égale à 3 trames, soit 6 ms, dans le cadre du standard HiperLAN/2, c'est-à-dire que $T_0$ sera désactivé au plus tard à l'instant $t = t_0 + 6 + \Delta_0$.

Comme indiqué sur la figure 2, PDU(0) et PDU(4) ont été correctement reçus par le récepteur 2. En revanche, un incident (symbolisé par une croix sur la flèche d'émission des PDUs) s'est produit au cours de la transmission de PDU(1), PDU(2) et PDU(3).

En trame $f_1$, qui débute à l'instant $t_1$, émetteur 1 envoi PDU(5), qui n'est pas correctement reçu, PDU(6), PDU(7) et PDU(8). A l'émission de PDU(8), à l'instant $t_1 + \Delta_1$, l'émetteur 1 active le temporisateur $T_1$ associé à $BMB_1$ correspondant aux PDUs de numéro de séquence 8 à 15. $T_1$ sera désactivé au plus tard à l'instant $t_1 + 6 + \Delta_1$, après une durée égale à RTTmax.

Après réception de PDU(8), le récepteur 2 envoie à l'émetteur 1 un message d'acquittement contenant $BMB_0$, de valeur égale à 10001011. Sur réception de $BMB_0$, l'émetteur 1 désactive $T_0$, analyse le message d'acquittement, et détermine que PDU(1), PDU(2), PDU(3) et PDU(5) ne sont pas acquittés, et doivent donc être retransmis.

La trame $f_2$ débute à l'instant $t_2$. Etant de classe ARQ 0, l'émetteur 1 retransmet en trame $f_2$, PDU(1) et PDU(2) au récepteur 2. Lors de la réémission de PDU(1), à l'instant $t_2 + \Delta_2$, le temporisateur $T_0$ associé à $BMB_0$ est réactivé, pour une durée maximale égale à $t_2 + 6 + \Delta_2$.

L'émetteur 1 reçoit dans la même trame $f_2$ un message d'acquittement du récepteur 2 contenant $BMB_0$, de valeur égale à 11101011. Il désactive alors le temporisateur $T_0$, analyse le message d'acquittement, et détermine que PDU(3) et PDU(5) sont encore dans l'état non-acquitté et doivent donc être retransmis au récepteur 2.

En trame $f_3$, l'émetteur 1 se voit attribuer les ressources nécessaires à la transmission de PDU(3), PDU(5), PDU(9) et PDU(10). Une nouvelle fois, à l'émission de PDU(3) à l'instant $t_3 + \Delta_3$, l'émetteur 1 active $T_0$, pour une durée maximale égale à $t_3 + 6 + \Delta_3$.

En trame $f_4$, l'émetteur 1 dispose des ressources nécessaires à la transmission de PDU(11) et PDU(12), qui sont mal reçus par le récepteur 2, ainsi qu'illustré en figure 2. Dans la même trame $f_4$, le récepteur 2 envoie un message d'acquittement comprenant $BMB_0$ et $BMB_1$. Cependant, un incident survient au cours de la transmission de ce message d'acquittement, qui n'est pas reçu par l'émetteur 1.

En trame $f_5$, l'émetteur 1 poursuit donc la transmission de PDU(13), PDU(14) et PDU(15). A l'instant $t'_5$, le temporisateur $T_1$ arrive à expiration après RTTmax, et passe donc dans l'état désactivé. L'émetteur 1 en déduit donc qu'aucun des PDUs associés à $BMB_1$ n'est dans l'état acquitté, et que tous les PDUs associés à $BMB_1$ doivent donc être retransmis. Ayant encore une ressource disponible, et étant de classe ARQ 0, l'émetteur 1 entreprend donc dans la même trame $f_5$ de retransmettre PDU(8) à l'instant $t_5 + \Delta_5$, et réactive alors $T_1$, pour une durée maximale égale à $t_5 + \Delta_5 + 6$.

En trame $f_6$, l'émetteur 1 retransmet PDU(9). Le temporisateur $T_0$ passe à nouveau dans l'état désactivé, après RTTmax, indiquant à l'émetteur 1 l'état non-acquitté de PDU(3) et PDU(5). La file d'attente de retransmission maintenue par l'émetteur 1 est alors mise à jour, de manière à comprendre les PDUs de numéro de séquence suivants : {3, 5, 10, 11, 12, 13, 14, 15}. Un tri des PDUs de la file d'attente par ordre croissant de numéro de séquence permet à l'émetteur 1 de déterminer qu'il doit retransmettre, en trame $f_6$, PDU(3), PDU(5), puis PDU(10). Le temporisateur $T_0$ est à nouveau réactivé lors de la transmission de PDU(3). Après retransmission des PDUs de numéro de séquence 3, 5 et 10, la file d'attente de retransmission est mise à jour et comprend les PDUs de numéro de séquence suivants: {11, 12, 13, 14, 15}.

Après avoir reçu correctement PDU(10), le récepteur 2 envoie à l'émetteur 1 un message d'acquittement comprenant $BMB_0$ = 11111111 et $BMB_1$ = 11100110. A la réception de ce message, $T_1$ et $T_0$ sont désactivés.

Selon un mode de réalisation particulièrement avantageux de l'invention, l'émetteur 1 analyse le message d'acquittement reçu, détermine que PDU(13) et PDU(14) ont été acquittés par le récepteur 2, et les supprime de la file d'attente de retransmission, de sorte qu'elle contient désormais les PDUs de numéro de séquence {11, 12, 15}.

En trame $f_7$, l'émetteur 1 retransmet donc PDU(11), PDU(12) et PDU(15). En trame $f_8$, le récepteur 2 émet un message d'acquittement comprenant $BMB_1$ = 11111111, dont la réception par l'émetteur 1 entraîne la désactivation du temporisateur $T_1$.

Tous les PDUs de numéros de séquence 0 à 15 sont alors acquittés, et la file d'attente de retransmission maintenue par l'émetteur 1 est désormais vide.

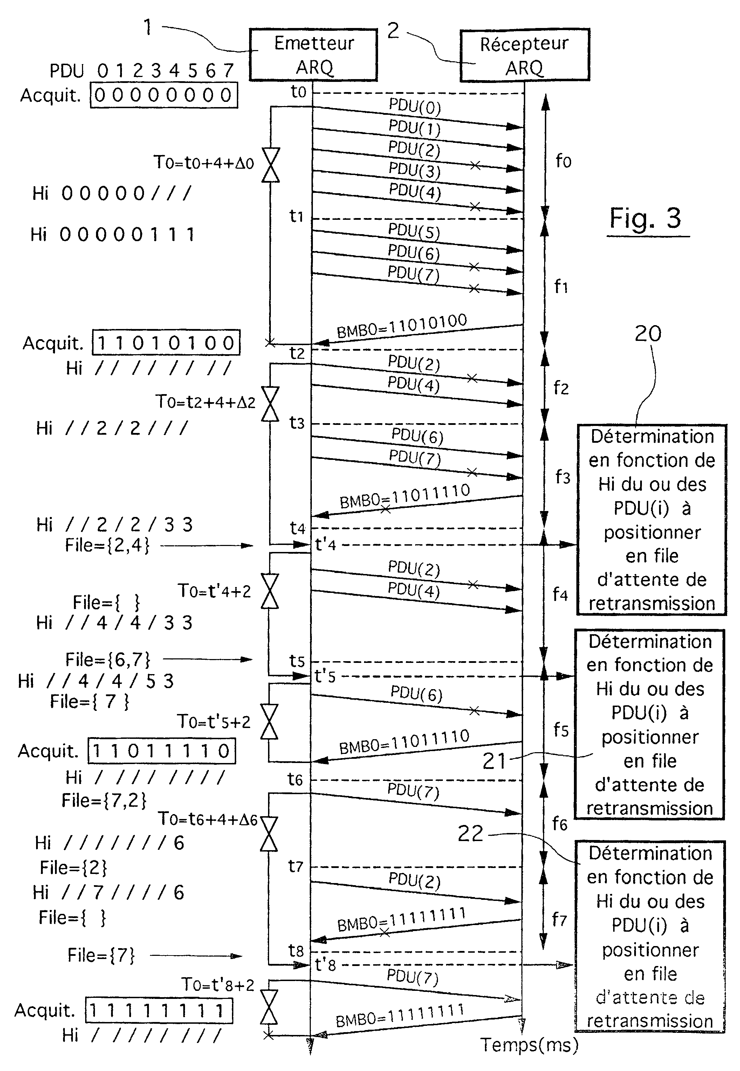

On présente désormais, en relation avec la figure 3, un deuxième mode de réalisation de l'invention, dans lequel on associe, outre un temporisateur à chacun des blocs d'acquittement, un horodateur à chaque PDU non-acquitté.

On considère à nouveau un émetteur et un récepteur de classe ARQ 0, mais on considère désormais une durée RTTmax égale à 2 trames, soit 4 ms dans le cas d'HiperLAN/2 où les trames sont d'une durée de 2 ms.

On s'intéresse à nouveau aux trames numérotées $f_0$ à $f_7$. On associe un temporisateur $T_0$ au bloc d'acquittement $BMB_0$, associé aux PDUs numérotés 0 à 7. On associe également un horodateur $H_i$ au PDU de numéro de séquence i, dont la valeur est exprimée en trames, et qui est activé lors de l'émission du PDU(i).

Ainsi, en figure 3, l'émetteur 1 envoie en trame $f_0$ les PDUs numérotés 0 à 4. A l'instant $t_0 + \Delta_0$ d'émission de PDU(0), on active $T_0$, qui sera désactivé au plus tard après une durée égale à RTTmax, c'est-à-dire à l'instant $t_0 + \Delta_0$ + 4. En fin de trame $f_0$, les horodateurs $H_0$ à $H_4$ sont donc activés et ont pour valeur 0, et les horodateurs $H_5$ à $H_7$ sont désactivés.

En trame $f_1$, l'émetteur 1 transmet les PDUs numérotés 5 à 7. Les horodateurs $H_5$ à $H_7$ prennent donc la valeur 1. Le récepteur 2 envoie par ailleurs un message d'acquittement comprenant $BMB_0$ = 11010100 à l'émetteur 1, qui analyse ce message, et en déduit, le récepteur 2 étant de classe ARQ 0, que les PDUs numérotés 2, 4, 6 et 7 ne sont pas acquittés et doivent donc être retransmis. Sur réception de ce message d'acquittement, tous les horodateurs $H_i$ des PDUs 0 à 7 sont désactivés, ainsi que le temporisateur $T_0$.

En trame $f_2$, l'émetteur 1 retransmet PDU(2) à $t_2 + \Delta_2$, et réactive alors $T_0$ pour une durée maximale égale à RTTmax, puis retransmet PDU(4). On a alors $H_2$ et $H_4$ activés et égaux à 2 ; les autres horodateurs $H_i$ des PDUs de $BMB_0$ sont désactivés.

En trame $f_3$, l'émetteur 1 retransmet PDU(6) et PDU(7), et le récepteur 2 envoie un message d'acquittement contenant $BMB_0$, qui n'est pas correctement reçu par l'émetteur 1. $H_6$ et $H_7$ sont alors activés à la valeur 3. A $t'_4 = t_2$ + $\Delta_2$ + 4, le temporisateur $T_0$ est désactivé. L'émetteur 1 doit alors déterminer, au cours d'une étape référencée 20, quels sont les PDUs qu'il doit positionner dans une file d'attente, en vue d'une retransmission ultérieure.

L'émetteur 1 analyse alors la valeur, exprimée en trames, des horodateurs associés aux différents PDUs non-acquittés de $BMB_0$, à savoir PDU(2), PDU(4), PDU(6) et PDU(7). On désigne par f(t) le numéro de la trame à laquelle appartient l'instant t. On a, pour les PDUs 2, 4, 6 et 7 :

$$f(t'_4) - H_2 = 4 - 2 = 2 \geq RTTmax$$

$$f(t'_4) - H_4 = 4 - 2 = 2 \geq RTTmax$$

$$f(t'_4) - H_6 = 4 - 3 = 1 < RTTmax$$

$$f(t'_4) - H_7 = 4 - 3 = 1 < RTTmax$$

On en déduit donc que les PDUs 6 et 7 ne doivent pas être retransmis, car ils ont été envoyés trop récemment pour avoir été traités à coup sûr par le récepteur 2 : en effet, seule une trame s'est écoulée entre leur transmission et la désactivation de $T_0$. L'émetteur 1 place alors PDU(2) et PDU(4) dans la file d'attente de retransmission, et le temporisateur $T_0$ est immédiatement réactivé à :

$$T_0 = V(passage) + (H_i - H_j)$$

où V(passage) est la valeur de $T_0$ lors de sa désactivation, $H_i$ est la valeur de l'horodateur du plus vieux PDU non-acquitté de $BMB_0$ qui ne doit pas être retransmis, et $H_j$ est la valeur du plus vieux PDU non-acquitté de $BMB_0$ qu'il faut retransmettre.
Soit

$$T_0 = t'_4 + (H_6 - H_2)*2 \text{ en ms}$$

Soit

$$T_0 = t'_4 + 2 \text{ en ms.}$$

L'émetteur 1 retransmet alors PDU(2) et PDU(4) en trame $f_4$. La file d'attente de retransmission est donc vide, et on a $H_2 = H_4 = 4$ et $H_6 = H_7 = 3$. $T_0$ est désactivé en trame $f_5$ à l'instant $t'_5$. L'émetteur 1 réitère alors le calcul effectué ci-dessus, pour déterminer, au cours de l'étape référencée 21, quels sont les PDUs non-acquittés de $BMB_0$ à positionner dans la file d'attente de retransmission :

$$f(t'_5) - H_2 = 5 - 4 = 1 < RTTmax$$

$$f(t'_5) - H_4 = 5 - 4 = 1 < RTTmax$$

$$f(t'_5) - H_6 = 5 - 3 = 2 \geq RTTmax$$

$$f(t'_5) - H_7 = 5 - 3 = 2 \geq RTTmax$$

On en déduit donc que les PDUs 2 et 4 ne doivent pas être retransmis, car la durée qui s'est écoulée entre leur dernière transmission et la désactivation de $T_0$ est inférieure à RTTmax, et ces PDUs peuvent donc ne pas avoir encore été traités par le récepteur 2 : il apparaît donc normal, pour ces deux PDUs, que l'émetteur n'ait pas reçu de message d'acquittement correspondant.

PDU(6) et PDU(7) sont placés dans la file d'attente de retransmission, et $T_0$ est immédiatement réactivé et prend la valeur définie par l'équation ci-dessous :

$$T_0 = V(passage) + (H_i - H_j)$$

Soit $T_0 = t'_5 + (H_2 - H_6)*2$ en ms (car PDU(2) est le plus vieux PDU non-acquitté de $BMB_0$ qui ne doit pas être retransmis, et PDU(6) est le plus vieux PDU non-acquitté de $BMB_0$ qui doit être retransmis)

Soit

$$T_0 = t'_5 + 2 \text{ en ms.}$$

En trame $f_5$, l'émetteur 1 retransmet PDU(6). La file d'attente de retransmission ne contient alors plus que PDU(7), et on a $H_2 = H_4 = 4$, $H_6 = 5$ et $H_7 = 3$. L'émetteur 1 reçoit alors du récepteur 2 un message d'acquittement comprenant $BMB_0 = 11011110$. Tous les horodateurs associés aux PDUs 0 à 7 sont alors désactivés, et PDU(7) et PDU(2) sont positionnés dans la file d'attente de retransmission.

En trame $f_6$, PDU(7) est retransmis à l'instant $t_6 + \Delta_6$, et $T_0$ est réactivé et prend la valeur $T_0 = t_6 + \Delta_6 + 4$. $H_7$ est également réactivé et prend la valeur 6, et PDU(7) est supprimé de la file d'attente de retransmission.

En trame $f_7$, l'émetteur 1 transmet PDU(2), $H_2$ est alors activé et prend la valeur 7, et la file d'attente de retransmission est alors vide. Le récepteur 2 envoie un message d'acquittement contenant $BMB_0=11111111$ acquittant l'ensemble des PDUs 0 à 7, mais qu'un incident de transmission empêche l'émetteur 1 de recevoir correctement.

A l'instant $t'_8$, en trame $f_8$, $T_0$ est désactivé. L'émetteur 1 doit alors déterminer, au cours de l'étape référencée 22, quels sont les PDUs non-acquittés de $BMB_0$ qui doivent être positionnés dans la file d'attente de retransmission. Dans ce dessein, il analyse la valeur des horodateurs associés à PDU(2) et PDU(7), de façon à déterminer la durée qui s'est écoulée entre la dernière transmission de ces PDUs et la désactivation de $T_0$ :

$$f(t'_8) - H_2 = 8 - 7 = 1 < RTTmax$$

$$f(t'_8) - H_7 = 8 - 6 = 2 \geq RTTmax$$

Seul PDU(7) est placé dans la file d'attente de retransmission, car il a été envoyé depuis suffisamment longtemps pour avoir été traité et acquitté par le récepteur 2. L'absence de message d'acquittement pour PDU(7) est donc indicateur d'une erreur de transmission possible.

Le temporisateur $T_0$ est immédiatement réactivé et prend la valeur $T_0 = t'_8 + (H_2 - H_7)*2$ en ms, soit $T_0 = t'_8 + 2$.

En trame $f_8$, l'émetteur 1 reçoit un message d'acquittement comprenant le bloc d'acquittement $BMB_0 = 11111111$, indiquant que tous les PDUs de numéros de séquence 0 à 7 ont été correctement reçus par le récepteur 2. Tous les horodateurs $H_0$ à $H_7$ sont alors désactivés, ainsi que le temporisateur $T_0$.

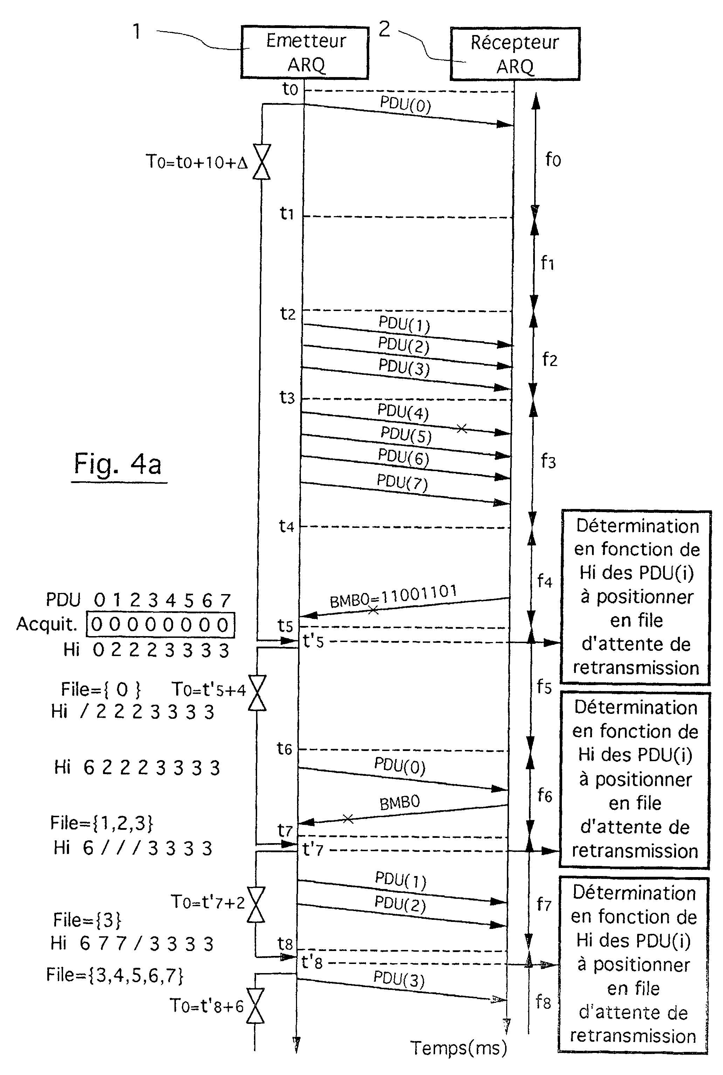

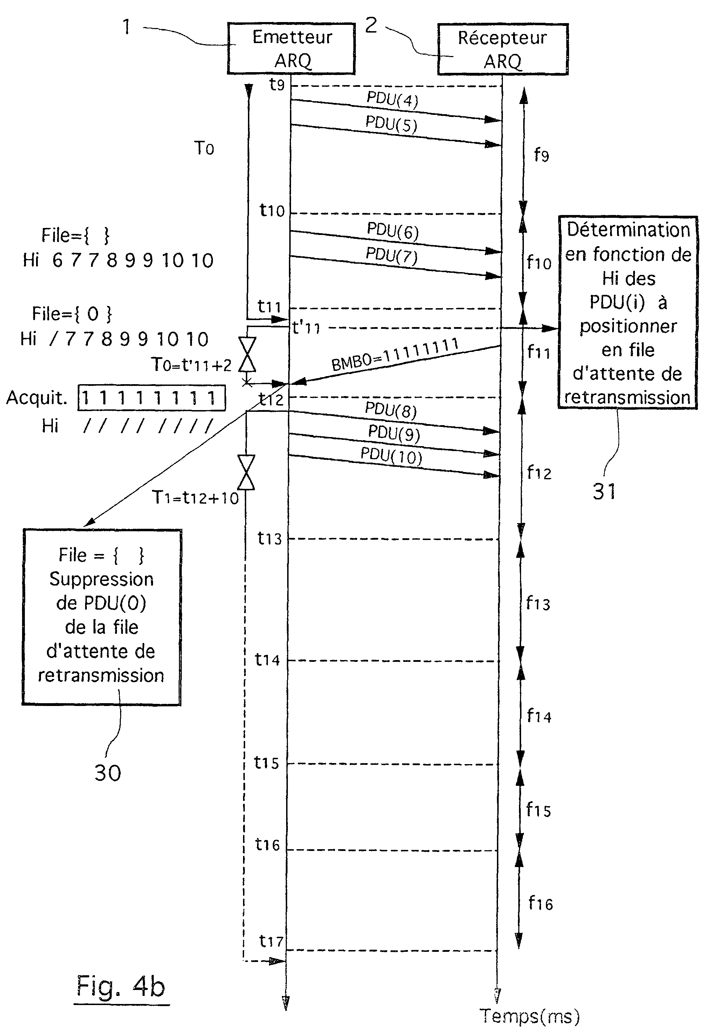

Les mécanismes mis en oeuvre par l'émetteur et le récepteur ARQ en figure 4 sont similaires à ceux illustrés en figure 3, et ne sont donc pas décrits plus en détails dans ce document. La figure 4 présente un émetteur et un récepteur ARQ de classe 0, pour lesquels la durée RTTmax est fixée à 10 trames, soit 20 ms dans le cadre du protocole ARQ d'HiperLAN/2.

On notera qu'à l'issue de l'étape référencée 31, on détermine que le PDU(0) doit être positionné en file d'attente de retransmission, en vue d'une retransmission ultérieure. Cependant, dans la même trame $f_{11}$, et avant d'avoir pu retransmettre PDU(0), l'émetteur 1 reçoit du récepteur 2, un message d'acquittement comprenant le bloc d'acquittement $BMB_0$ = 11111111, indiquant que le PDU(0) a été correctement reçu par le récepteur 2. L'émetteur 1 détecte donc qu'il est inutile de retransmettre PDU(0) et met en oeuvre une étape 30 de suppression de PDU(0) de la file d'attente de retransmission.

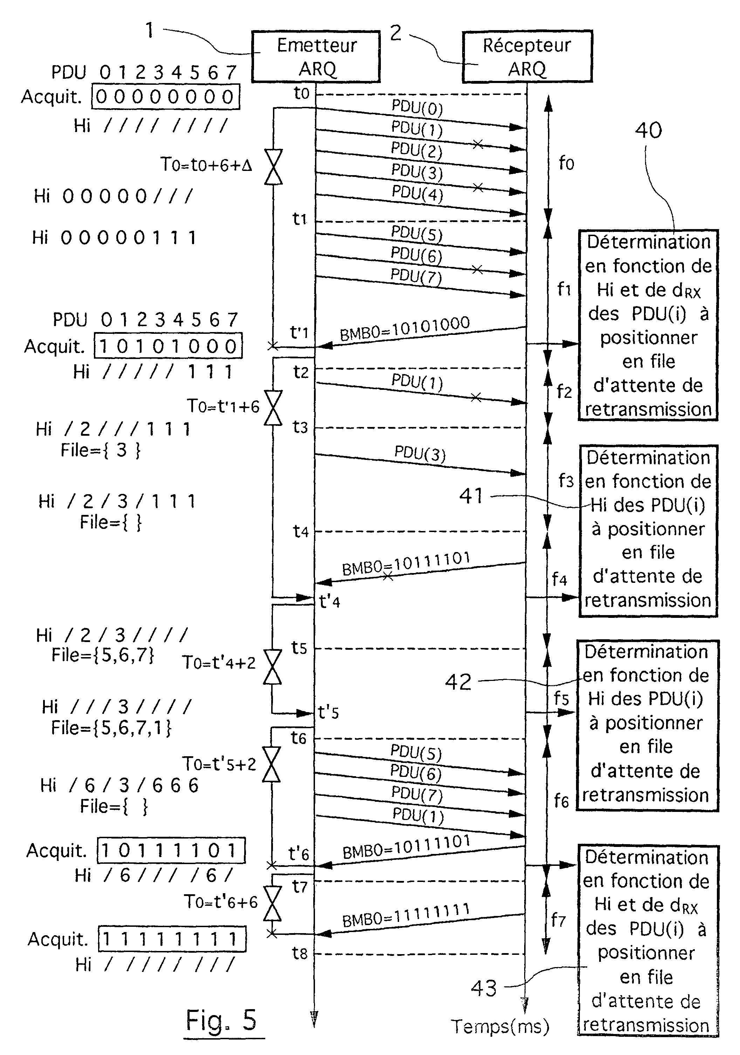

On décrit désormais, en relation avec la figure 5, un exemple de mise en oeuvre de l'invention dans le cadre d'échanges de paquets de données (PDUs) entre un émetteur de classe ARQ 0 et un récepteur de classe ARQ 1. On note $d_{RX}$ = 1 (exprimé en trames) le délai de traitement du récepteur de classe ARQ 1. On suppose que RTTmax = 3 trames, soit 6 ms, et on considère les trames $f_0$ à $f_7$, pendant lesquelles on transmet PDU(0) à PDU(7). On associe le temporisateur $T_0$ au bloc d'acquittement $BMB_0$, et un horodateur $H_i$ à chaque PDU(i).

En trame $f_0$, débutant à l'instant $t_0$, l'émetteur 1 transmet PDU(0) à PDU(4). A l'émission de PDU(0), le temporisateur $T_0$ associé au bloc $BMB_0$ est activé et prend la valeur $T_0 = t_0 + 6 + \Delta_0$. Les horodateurs $H_0$ à $H_4$ sont activés et prennent la valeur 0, indiquant ainsi que les PDUs 0 à 4 auxquels ils sont associés ont été transmis en trame $f_0$.

En trame $f_1$, l'émetteur 1 transmet ensuite les PDUs numérotés 5 à 7, et les horodateurs $H_5$ à $H_7$ sont alors activés et prennent la valeur 1. A l'instant $t'_1$, en trame $f_1$, l'émetteur 1 reçoit du récepteur 2 un message d'acquittement comprenant le bloc d'acquittement $BMB_0$ = 10101000. La réception de ce message désactive le temporisateur $T_0$.

L'émetteur 1 met alors en oeuvre une analyse de ce message d'acquittement, de manière à déterminer, au cours d'une étape référencée 40, les PDUs non-acquittés du bloc $BMB_0$ qui doivent être positionnés dans la file d'attente de retransmission.

Un telle étape 40 consiste à évaluer le temps, exprimé en trames, qui s'est écoulé entre la transmission d'un PDU et la désactivation du temporisateur $T_0$. Pour PDU(0) à PDU(4), on a $f(t'_1) - H_i = 1 \geq d_{RX}$. On en déduit donc que le message d'acquittement reçu véhicule l'état d'acquittement véritable des PDUs 0 à 4 : les PDUs 1 et 3 sont donc dans l'état non-acquitté.

Pour PDU(5) à PDU(7) en revanche, on a $f(t'_1) - H_i = 1 - 1 = 0 < d_{RX}$. On en déduit donc que les PDUs 5 à 7 ne peuvent pas être concernés par le message d'acquittement reçu à l'instant $t'_1$. Ils ont en effet été émis trop tardivement, compte tenu de la classe du récepteur 2, pour que ce dernier ait eu le temps de les recevoir, de les traiter et d'envoyer un message d'acquittement correspondant à l'émetteur 1 avant l'instant $t'_1$.

A l'issue de cette étape 40, l'émetteur 1 détermine donc que seuls PDU(1) et PDU(3) doivent être positionnés en file d'attente de retransmission. Le temporisateur $T_0$ est alors immédiatement réactivé et prend la valeur suivante :

$$T_0 = V(passage) + (RTTmax - (f(t'_1) - H_i)),$$

où V(passage) est la valeur du temporisateur $T_0$ lors de sa désactivation, $f(t'_1)$ est la valeur temporelle courante exprimée en trames, et $H_i$ est la valeur de l'horodateur associé au plus vieux PDU non-acquitté de $BMB_0$ qui ne doit pas être retransmis. On a donc :

$$T_0 = t'_1 + (RTTmax - (f(t'_1) - H_5))*2$$

$$T_0 = t'_1 + (3 - (1 - 1))*2$$

$$T_0 = t'_1 + 6 \text{ en ms.}$$

Les horodateurs de PDU(1) et PDU(3) sont ensuite désactivés, ainsi que ceux de PDU(0), PDU(2) et PDU(4), qui sont bien acquittés.

Au cours de la trame $f_2$, l'émetteur 1 retransmet PDU(1), qui n'est pas correctement reçu par le récepteur 2, et l'horodateur $H_1$ est alors activé et prend la valeur 2. La file d'attente de retransmission ne contient plus que PDU(3). En trame $f_3$, l'émetteur 1 envoie PDU(3), l'horodateur $H_3$ correspondant est activé et prend la valeur 3, et la file d'attente de retransmission est désormais vide.

En trame $f_4$, le récepteur 2 envoie un message d'acquittement comprenant $BMB_0$ = 10111101, mais un incident de transmission fait qu'il n'est pas reçu par l'émetteur 1. A l'instant $t'_4$ en trame $f_4$, le temporisateur $T_0$ arrive donc à expiration après RTTmax. L'émetteur 1 met alors en oeuvre une étape 41 de détermination, en fonction des valeurs

des horodateurs $H_i$ des PDUs non-acquittés, et des classes ARQ de l'émetteur 1 et du récepteur 2, du ou des PDUs qu'il faut positionner en file d'attente de retransmission.

Pour PDU(1) et PDU(3), on a respectivement :

$$f(t'_4) - H_1 = 4 - 2 = 2 < RTTmax,$$

et

$$f(t'_4) - H_3 = 4 - 3 = 1 < RTTmax.$$

On en déduit donc que les PDUs 1 et 3 ont été transmis trop récemment pour que le récepteur 2 ait eu, à coup sûr, le temps de les recevoir, de les traiter, et d'envoyer un message d'acquittement correspondant. PDU(1) et PDU(3) ne doivent donc pas être retransmis.

Pour les PDUs 5 à 7, en revanche, on a :

$$f(t'_4) - H_5 = 4 - 1 = 3 \geq RTTmax,$$

et

$$f(t'_4) - H_6 = 4 - 1 = 3 \geq RTTmax,$$

et

$$f(t'_4) - H_7 = 4 - 1 = 3 \geq RTTmax.$$

La durée qui s'est écoulée entre la transmission de chacun des PDUs 5 à 7 en trame 1, et l'expiration du temporisateur $T_0$ est suffisante pour que le récepteur ait envoyé un message d'acquittement relatif à ces PDUs. En l'absence d'un tel acquittement, l'émetteur 1 prend la décision de positionner PDU(5), PDU(6) et PDU(7) dans la file d'attente de retransmission.

Le temporisateur $T_0$ correspondant est immédiatement réactivé et prend la valeur :

$$T_0 = V(passage) + (H_i - H_j)$$

où $V(passage)$ est la valeur de $T_0$ lors de sa désactivation, $H_i$ est la valeur de l'horodateur du plus vieux PDU non-acquitté de $BMB_0$ qui ne doit pas être retransmis, et $H_j$ est la valeur du plus vieux PDU non-acquitté de $BMB_0$ qu'il faut retransmettre.

Soit

$$T_0 = t'_4 + (H_1 - H_5)*2 \text{ en ms}$$

Soit

$$T_0 = t'_4 + 2 \text{ en ms.}$$

Les horodateurs $H_5$, $H_6$ et $H_7$ sont désactivés.

En effet, PDU(1) est le plus vieux PDU non-acquitté de $BMB_0$ qui ne doit pas être retransmis, et PDU(5) est le plus vieux PDU non-acquitté de $BMB_0$ à retransmettre.

On suppose, par exemple, qu'aucune ressource de transmission n'est allouée à l'émetteur 1 en trame $f_5$. A l'instant $t'_5$, le temporisateur $T_0$ est désactivé après RTTmax, sans qu'aucun acquittement n'ait été reçu pour les PDUs de $BMB_0$.

L'émetteur 1 réalise alors une nouvelle étape 42 de détermination des PDUs non-acquittés à retransmettre, mettant en oeuvre des calculs similaires à ceux exposés ci-dessus :

$$f(t'_5) - H_1 = 5 - 2 = 3 \geq RTTmax,$$

et

$$f(t'_5) - H_3 = 5 - 3 = 2 < RTTmax.$$

Seul le PDU(1) doit donc être positionné en file d'attente de retransmission, car la durée qui s'est écoulée entre la transmission de PDU(3) et l'expiration de $T_0$ est trop faible pour être sûr que PDU(3) ait déjà pu être traité par le récepteur 2.

L'émetteur 1 place donc PDU(1) en file d'attente de retransmission, qui contient donc les numéros de séquence des PDUs suivants : $\{5, 6, 7\} \cup \{1\}$.

Le temporisateur $T_0$ est immédiatement réactivé et prend la valeur :

$$T_0 = V(passage) + (H_i - H_j),$$

comme ci-dessus.
Soit

$$T_0 = t'_5 + (H_3 - H_1)*2 \text{ en ms}$$

Soit

$$T_0 = t'_5 + 2 \text{ en ms.}$$

L'horodateur $H_1$ est désactivé, et $H_3$ est donc le seul horodateur encore actif parmi tous les PDUs associés à $BMB_0$.

En trame $f_6$, l'émetteur 1 dispose de ressources suffisantes pour transmettre tous les PDUs de la file d'attente. Les horodateurs $H_1$ et $H_5$ à $H_7$ sont alors activés et prennent la valeur 6, et la file d'attente de retransmission est alors vide. L'émetteur 1 reçoit par ailleurs, à l'instant $t'_6$, un message d'acquittement comprenant $BMB_0 = 10111101$, et désactive alors $T_0$.

A la réception de $BMB_0$, l'émetteur 1 met en oeuvre une étape 43 de détermination du ou des PDUs non-acquittés de $BMB_0$ à positionner en file d'attente de retransmission. Dans ce dessein, il évalue la durée qui s'est écoulée entre la transmission de chacun des PDUs non-acquittés (à savoir PDU(1) et PDU(6)) et la désactivation de $T_0$ :

$$f(t'_6) - H_1 = 6 - 6 = 0 < d_{RX},$$

et

$$f(t'_6) - H_6 = 6 - 6 = 0 < d_{RX}.$$

Compte tenu de la classe ARQ du récepteur 2, PDU(1) et PDU(6) ne sont pas a priori concernés par le message d'acquittement reçu à $t'_6$. Il est inutile de les positionner en file d'attente de retransmission. Le temporisateur $T_0$ et immédiatement réactivé et prend la valeur :

$$T_0 = V(passage) + (RTTmax - (f(t'_6) - H_i)),$$

où V(passage) est la valeur du temporisateur $T_0$ lors de sa désactivation, $f(t'_6)$ est la valeur temporelle courante ex-

primée en trames, et $H_i$ est la valeur de l'horodateur associé au plus vieux PDU non-acquitté de $BMB_0$ qui ne doit pas être retransmis. On a donc :

$$T_0 = t'_6 + (RTTmax - (f(t'_6) - H_1))*2$$

$$T_0 = t'_6 + (3 - (6 - 6))*2$$

$$T_0 = t'_6 + 6 \text{ en ms.}$$

Les horodateurs des PDUs 5 et 6, acquittés positivement, sont désactivés.

En trame $f_7$, l'émetteur 1 reçoit un nouveau message d'acquittement comprenant $BMB_0 = 11111111$, qui permet la désactivation de $T_0$, et qui indique que tous les PDUs associés à $BMB_0$ ont été correctement acquittés. Tous les horodateurs correspondant sont désactivés.

**Revendications**

1. Procédé de transmission de données entre au moins un émetteur (1) et au moins un récepteur (2), sous forme de paquets d'au moins une donnée, chacun desdits paquets de données (PDU) étant associé à un identifiant dudit paquet,
   ledit récepteur (2) envoyant périodiquement audit émetteur (1) un message d'acquittement, comprenant au moins un bloc d'acquittement associé à un nombre prédéterminé de paquets de données présentant des identifiants consécutifs, de manière à indiquer audit émetteur (1), de façon sélective, un état d'acquittement (acquitté ou non-acquitté) de chacun desdits paquets de données dudit bloc,
   ledit procédé comprenant au moins une étape d'association (10) d'au moins un temporisateur à au moins certains desdits blocs d'acquittement,
   **caractérisé en ce qu'**il comprend en outre au moins une étape d'horodatage, consistant à associer un horodateur ($H_i$) à au moins certains paquets de données dans ledit état non-acquitté.

2. Procédé de transmission de données selon la revendication 1, **caractérisé en ce que**, pour un bloc d'acquittement donné, il comprend une première étape d'acdvation (11) dudit temporisateur, lorsque ledit émetteur (1) envoie audit récepteur (2) le premier desdits paquets de données d'identifiants consécutifs associés audit bloc, de façon que ledit temporisateur passe dans ledit état activé.

3. Procédé de transmission de données selon l'une quelconque des revendications 1 et 2, **caractérisé en ce que**, pour un bloc d'acquittement donné, il comprend une première étape de désactivation (12) dudit temporisateur après une durée maximale prédéterminée,
   et **en ce que** lesdits paquets de données dudit bloc sont alors considérés par ledit émetteur dans ledit état non-acquitté.

4. Procédé de transmission de données selon l'une quelconque des revendications 1 à 3, **caractérisé en ce que**, pour un bloc d'acquittement donné, il comprend une deuxième étape de désactivation (12) dudit temporisateur lorsque ledit émetteur (1) reçoit un acquittement cumulé d'au moins lesdits paquets de données dudit bloc, indiquant que lesdits paquets de données dudit bloc sont dans ledit état acquitté.

5. Procédé de transmission de données selon l'une quelconque des revendications 1 à 4, **caractérisé en ce que**, pour un bloc d'acquittement donné, il comprend une troisième étape de désactivation (12) dudit temporisateur, lorsque ledit émetteur (1) reçoit un message d'acquittement comprenant au moins ledit bloc d'acquittement.

6. Procédé de transmission de données selon la revendication 5, **caractérisé en ce qu'**à la réception par l'émetteur (1) dudit message d'acquittement, il met en oeuvre une étape d'analyse dudit message d'acquittement, de manière à déterminer ledit état acquitté ou non-acquitté de chacun desdits paquets de données dudit bloc.

7. Procédé de transmission de données selon l'une quelconque des revendications 3 à 6, **caractérisé en ce qu'**à l'issue d'une desdites étapes de désactivation dudit temporisateur, au moins un paquet de données dudit bloc étant dans ledit état non-acquitté, il met en oeuvre une étape de positionnement (14) d'au moins certains desdits paquets de données non-acquittés dudit bloc dans une file d'attente de retransmission.

**8.** Procédé de transmission de données selon l'une quelconque des revendications 6 et 7, **caractérisé en ce qu'**à l'issue de ladite étape d'analyse, il met en oeuvre une étape de contrôle de la présence, dans ladite file d'attente de retransmission, d'au moins un paquet de données acquitté dudit bloc,
et **en ce que**, lorsque la présence dans ladite file d'attente d'au moins un paquet de données acquitté dudit bloc est confirmée, il met en oeuvre une étape de suppression (30) dudit ou desdits paquets de données acquittés dudit bloc de ladite file d'attente de retransmission.

**9.** Procédé de transmission de données selon l'une quelconque des revendications 7 et 8, **caractérisé en ce qu'**il met en oeuvre au moins une étape de retransmission (15) dudit ou desdits paquets de données dudit bloc positionnés dans ladite file d'attente de retransmission,
et une deuxième étape d'activation dudit temporisateur dudit bloc lors de la retransmission du premier desdits paquets de données dudit bloc positionnés dans ladite file d'attente.

**10.** Procédé de transmission de données selon l'une quelconque des revendications 1 à 9, **caractérisé en ce qu'**il met en oeuvre un protocole de type ARQ (en anglais "Automatic Repeat Request").

**11.** Procédé de transmission de données selon l'une quelconque des revendications 1 à 10, **caractérisé en ce que** ledit horodateur est activé lorsque ledit émetteur (1) envoie ledit paquet de données associé.

**12.** Procédé de transmission de données selon l'une quelconque des revendications 7 à 11, **caractérisé en ce que** ladite étape de positionnement comprend une sous-étape préliminaire de sélection (13 ; 20, 21, 22 ; 31 ; 40, 41, 42, 43) des paquets de données à positionner dans ladite file d'attente, en fonction d'au moins un critère de sélection prédéterminé.

**13.** Procédé de transmission de données selon la revendication 12, **caractérisé en ce que** ledit critère de sélection tient compte d'au moins une des informations appartenant au groupe comprenant :

- la valeur dudit horodateur associé à un paquet de données non-acquitté dudit bloc ;
- la classe ARQ dudit récepteur (2).

**14.** Procédé de transmission de données selon l'une quelconque des revendications 12 et 13, **caractérisé en ce que** ladite sous-étape de sélection (13) permet de sélectionner ledit ou lesdits paquets de données non-acquittés dudit bloc, associés à un horodateur de valeur supérieure ou égale à ladite durée maximale prédéterminée.

**15.** Procédé de transmission de données selon l'une quelconque des revendications 7 à 14, **caractérisé en ce que** ladite étape de positionnement (14) comprend en outre, pour chacun desdits paquets de données sélectionnés, une sous-étape de désactivation dudit horodateur associé.

**16.** Procédé de transmission de données selon les revendications 9 et 12,
**caractérisé en ce que**,
lorsque tous les paquets de données non-acquittés dudit bloc ont été sélectionnés dans ladite sous-étape de sélection (13),
ledit temporisateur prend, lors de ladite deuxième étape d'activation, la valeur V(T) suivante :

$$V(T) = t(activation) + d_{max},$$

où t(activation) est la valeur temporelle courante lors de ladite deuxième étape d'activation, et où $d_{max}$ est ladite durée maximale prédéterminée,
et **en ce que**,
l'horodateur associé à chaque paquet de données du bloc positionné dans ladite file d'attente est activé et prend la valeur temporelle courante lors de ladite retransmission dudit paquet de données.

**17.** Procédé de transmission de données selon l'une quelconque des revendications 14 à 16, **caractérisé en ce qu'**à l'issue de ladite première étape de désactivation dudit temporisateur,

si au moins un paquet de données non-acquitté dudit bloc, associé à un horodateur de valeur inférieure à ladite durée maximale prédéterminée, n'a pas été sélectionné au cours de ladite sous-étape de sélection (13),
il met en oeuvre une troisième étape d'activation dudit temporisateur dudit bloc, de façon que ledit temporisateur prenne la valeur V(T) suivante :

$$V(T) = V(passage) + (Horodateur[i] - Horodateur[j]),$$

où V(passage) est la valeur dudit temporisateur lors de ladite étape de passage dudit temporisateur dans ledit état désactivé,
Horodateur[j] est la plus grande des valeurs desdits horodateurs associés auxdits paquets de données non-acquittés dudit bloc sélectionnés au cours de ladite sous-étape de sélection (13),
et Horodateur[i] est la plus grande des valeurs desdits horodateurs associés auxdits paquets de données non-acquittés dudit bloc n'ayant pas été sélectionnés au cours de ladite sous-étape de sélection (13).

18. Procédé de transmission de données selon la revendication 6 et l'une quelconque des revendications 1 à 17, **caractérisé en ce qu'**à l'issue de ladite étape d'analyse dudit message d'acquittement, ledit procédé met en oeuvre, pour chacun desdits paquets de données acquittés dudit bloc, une étape de désactivation dudit horodateur associé.

19. Procédé de transmission de données selon l'une quelconque des revendications 13 à 18, **caractérisé en ce qu'**à l'issue de ladite troisième étape de désactivation dudit temporisateur,
si au moins un paquet de données non-acquitté dudit bloc n'a pas été sélectionné au cours de ladite sous-étape de sélection (13) en fonction d'un critère de décision lié à la classe ARQ dudit récepteur (2),
il met en oeuvre une quatrième étape d'activation dudit temporisateur dudit bloc, de façon que ledit temporisateur prenne la valeur V(T) suivante :

$$V(T) = V(passage) + (d_{max} - (t - Horodateur[i])),$$

où V(passage) est la valeur dudit temporisateur lors de ladite étape de passage dudit temporisateur dans ledit état désactivé,
$d_{max}$ est ladite durée maximale prédéterminée,
t est la valeur temporelle courante,
et Horodateur[i] est la plus grande des valeurs desdits horodateurs associés auxdits paquets de données non-acquittés dudit bloc n'ayant pas été sélectionnés au cours de ladite sous-étape de sélection.

20. Émetteur (1) de données transmises vers au moins un récepteur (2), sous forme de paquets d'au moins une donnée, chacun desdits paquets de données étant associé à un identifiant dudit paquet,
ledit récepteur (2) envoyant périodiquement audit émetteur (1) un message d'acquittement, comprenant au moins un bloc d'acquittement associé à un nombre prédéterminé de paquets de données présentant des identifiants consécutifs, de manière à indiquer audit émetteur (1), de façon sélective, un état d'acquittement (acquitté ou non-acquitté) de chacun desdits paquets de données dudit bloc,
ledit émetteur (1) comprenant des moyens d'association d'au moins un temporisateur à au moins certains desdits blocs d'acquittement,
**caractérisé en ce qu'**il comprend en outre des moyens d'horodatage, permettant d'associer un horodateur à au moins certains paquets de données dans ledit état non-acquitté.

21. Système de transmission de données entre au moins un émetteur (1) et au moins un récepteur (2), sous forme de paquets d'au moins une donnée, chacun desdits paquets de données étant associé à un identifiant dudit paquet,
ledit récepteur (2) envoyant périodiquement audit émetteur (1) un message d'acquittement, comprenant au moins un bloc d'acquittement associé à un nombre prédéterminé de paquets de données présentant des identifiants consécutifs, de manière à indiquer audit émetteur (1), de façon sélective, un état d'acquittement (acquitté ou non-acquitté) de chacun desdits paquets de données dudit bloc,
ledit système comprenant des moyens d'association d'au moins un temporisateur à au moins certains desdits blocs d'acquittement,
**caractérisé en ce qu'**il comprend en outre des moyens d'horodatage, permettant d'associer un horodateur à au moins certains paquets de données dans ledit état non-acquitté.

**Claims**

1. Data transmission process between at least one transmitter (1) and at least one receiver (2), in the form of packets of at least one data bit, each of said data packets (PDU) being associated with an identifier of said packet, said receiver (2) periodically sending to said transmitter (1) an acknowledgement message, including at least one bitmap block associated with a predetermined number of data packets having consecutive identifiers, so as to indicate to said transmitter (1), in a selective fashion, an acknowledgement state (acknowledged or non-acknowledged) of each of said data packets of said block, said process including at least one association step (10) from at least one timer to at least certain of said bitmap blocks, **characterised in that** it further includes at least one date-time stamping step consisting in associating a date-time stamp ($H_i$) with at least certain data packets in said non-acknowledged state.

2. Data transmission process according to Claim 1, **characterised in that**, for a given bitmap block, it includes a first activation step (11) of said timer, when said transmitter (1) sends to said receiver (2) the first of said consecutive identifier data packets associated with said block, so that said timer goes to said activated state.

3. Data transmission process according to any one of Claims 1 and 2, **characterised in that**, for a given bitmap block, it includes a first de-activation step (12) of said timer after a predetermined maximum duration, and **in that** said data packets of said block are then taken into account by said transmitter in said non-acknowledged state.

4. Data transmission process according to any one of Claims 1 to 3, **characterised in that**, for a given bitmap block, it includes a second de-activation step (12) of said timer when said transmitter (1) receives a cumulative acknowledgement from at least said data packets of said block, indicating that said data packets of said block are in said acknowledged state.

5. Data transmission process according to any one of Claims 1 to 4, **characterised in that**, for a given bitmap block, it includes a third de-activation step (12) of said timer, when said transmitter (1) receives an acknowledgement message containing at least said bitmap block.

6. Data transmission process according to Claim 5, **characterised in that** on receipt by the transmitter (1) of said message acknowledgement, it implements an analysis step of said acknowledgement message, so as to determine said acknowledged or non-acknowledged state of each of said data packets of said block.

7. Data transmission process according to any one of Claims 3 to 6, **characterised in that**, at the conclusion of one of said de-activation steps of said timer, at least one data packet of said block being in said non-acknowledged state, it implements a positioning step (14) of at least certain of said non-acknowledged data packets of said block in a retransmission queue.

8. Data transmission process according to any one of Claims 6 and 7, **characterised in that**, at the conclusion of said analysis step, it implements a step for checking the presence, in said retransmission queue, of at least one acknowledged data packet of said block, and **in that**, when the presence in said queue of at least one acknowledged data packet of said block is confirmed, it implements a suppression step (30) of said acknowledged data packet or packets of said block of said retransmission queue.

9. Data transmission process according to any one of Claims 7 and 8, **characterised in that**, it implements at least one retransmission step (15) of said data packet or packets of said block positioned in said retransmission queue, and a second activation step of said timer of said block at the time of the retransmission of the first of said data packets of said block positioned in said queue.

10. Data transmission process according to any one of Claims 1 to 9, **characterised in that**, it implements an ARQ (automatic repeat request) type protocol.

11. Data transmission process according to any one of Claims 1 to 10, **characterised in that**, said date-time stamp is activated when said transmitter (1) sends said associated data packet.

12. Data transmission process according to any one of Claims 7 to 11, **characterised in that**, said positioning step includes a preliminary selection sub-step (13; 20, 21, 22; 31; 40, 41, 42, 43) of the data packets to be positioned in said queue, in relation to at least one predetermined selection criterion.

**13.** Data transmission process according to Claim 12, **characterised in that**, said selection criterion takes into account at least one of the information signals belonging to the group comprising:

- the value of said date-time stamp associated with a non-acknowledged data packet of said block;
- the ARQ class of said receiver (2).

**14.** Data transmission process according to any one of Claims 12 and 13, **characterised in that**, said selection substep (13) enables said non-acknowledged data packet or packets of said block to be selected, associated with a date-time stamp of a value greater than or equal to said predetermined maximum duration.

**15.** Data transmission process according to any one of Claims 7 to 14, **characterised in that**, said positioning step (14) further includes, for each of said selected data packets, a de-activation sub-step of said associated date-time stamp.

**16.** Data transmission process according to any one of Claims 9 and 12, **characterised in that**, when all the non-acknowledged data packets of said block have been selected in said selection sub-step (13), said timer adopts, at the time of said second activation step, the following value V(T) :

$$V(T) = t \text{ (activation)} + d_{max},$$

where t(activation) is the current time value at the time of said second activation step, and where $d_{max}$ is said predetermined maximum duration, and **in that** the date-time stamp associated with each data packet of the block positioned in said queue is activated and adopts the current time value at the time of said retransmission of said data packet.

**17.** Data transmission process according to any one of Claims 14 to 16, **characterised in that**, at the conclusion of said first de-activation step of said timer, if at least one non-acknowledged data packet of said block, associated with a date-time stamp of a value less than said predetermined maximum duration, has not been selected during said selection sub-step (13), it implements a third activation step of said timer of said block, so that said timer adopts the following value V(T):

$$V(T) = V(\text{transition}) + (\text{date-time stamp[i]} - \text{date-time stamp[j]},$$

where V(transition) is the value of said timer at the time of said transition step of said timer in said de-activated state, date-time stamp[j] is the greatest of the values of said date-time stamps associated with said non-acknowledged data packets of said block selected during said selection sub-step (13), and date-time stamp[i] is the greatest of the values of said date-time stamps associated with said non-acknowledged data packets of said block not having been selected during said selection sub-step (13).

**18.** Data transmission process according to Claim 6 and any one of Claims 1 to 17, **characterised in that**, on conclusion of said analysis step of said acknowledgment message, said process implements, for each of said acknowledged data packets of said block, a de-activation step of said associated date-time stamp.

**19.** Data transmission process according to any one of Claims 13 to 18, **characterised in that**, on conclusion of said third de-activation step of said timer, if at least one non-acknowledged data packet of said block has not been selected during said selection sub-step (13) in relation to a decision criterion linked to the ARQ class of said receiver (2), it implements a fourth activation step of said timer of said block, so that said timer adopts the following value V(T):

$$V(T) = V(\text{transition}) + (d_{max} - (t - \text{date-time stamp[i]})),$$

where V(transition) is the value of said timer at the time of said transition step of said timer in said de-activated state, $d_{max}$ is said predetermined maximum value, t is the current time value, and date-time stamp[i] is the greatest of the values of said date-time stamps associated with said non-acknowledged data packets of said block not having been selected during said selection sub-step.

**20.** Transmitter (1) of data transmitted to at least one receiver (2), in the form of packets of at least one data bit, each of said data packets being associated with an identifier of said packet, said receiver (2) periodically sending to said transmitter (1) an acknowledgement message, including at least one bitmap block associated with a predetermined number of data packets having consecutive identifiers, so as to indicate to said transmitter (1), in a selective fashion, an acknowledgement state (acknowledged or non-acknowledged) of each of said data packets of said block, said transmitter (1) including association means from at least one timer to at least certain of said bitmap blocks, **characterised in that** it further includes date-time stamping means enabling a date-time stamp to be associated with at least certain data packets in said non-acknowledged state.

**21.** Data transmission system between at least one transmitter (1) and at least one receiver (2), in the form of packets of at least one data bit, each of said data packets being associated with an identifier of said packet, said receiver (2) periodically sending to said transmitter (1) an acknowledgement message, including at least one bitmap block associated with a predetermined number of data packets having consecutive identifiers, so as to indicate to said transmitter (1), in a selective fashion, an acknowledgement state (acknowledged or non-acknowledged) of each of said data packets of said block, said system including association means from at least one timer to at least certain of said bitmap blocks, **characterised in that** it further includes date-time stamping means, enabling a date-time stamp to be associated with at least certain data packets in said non-acknowledged state.

**Patentansprüche**

**1.** Verfahren zum Senden von Daten zwischen mindestens einem Sender (1) und mindestens einem Empfänger (2) in Form von Paketen von mindestens einer Dateneinheit, wobei jedes dieser Datenpakete (PDU) mit einem Identifikationskennzeichen des erwähnten Pakets assoziiert ist;
der Empfänger (2) periodisch eine Bestätigungsmeldung an den Sender (1) sendet, wobei diese Meldung mindestens einen mit einer vorgegebenen Zahl von aufeinanderfolgende Identifikationskennzeichen aufweisenden Datenpaketen assoziierten Bestätigungsblock umfasst, um dem Sender (1) in selektiver Weise einen Bestätigungszustand (bestätigt oder nicht bestätigt) für jedes Datenpaket des Blocks zu melden,
wobei das Verfahren mindestens einen Schritt der Assoziierung (10) von mindestens einem Verzögerungsglied mit mindestens einigen der erwähnten Bestätigungsblöcke umfasst,
**dadurch gekennzeichnet, dass** es ferner mindestens einen Schritt zum Festlegen eines Zeitstempels bzw. einer Zeitinformation aufweist, darin bestehend, dass ein Zeitstempel bzw. eine Zeitinformation ($H_i$) mit mindestens einigen Datenpaketen im nicht bestätigten Zustand assoziiert wird.

**2.** Verfahren zum Senden von Daten nach Anspruch 1, **dadurch gekennzeichnet, dass** es für einen gegebenen Bestätigungsblock einen ersten Aktivierungsschritt (11) des Verzögerungsgliedes aufweist, wenn der Sender (1) dem Empfänger (2) das erste der aufeinanderfolgende Identifikationskennzeichen aufweisende Datenpakete sendet, die mit diesem Block assoziiert sind, so dass das Verzögerungsglied in den aktivierten Zustand übergeht.

**3.** Verfahren zum Senden von Daten nach einem der Ansprüche 1 oder 2, **dadurch gekennzeichnet, dass** es für einen gegebenen Bestätigungsblock einen ersten Schritt der Deaktivierung (12) des Verzögerungsgliedes nach einer vorgegebenen maximalen Zeitdauer aufweist und,
dass die Datenpakete des erwähnten Blocks vom Sender als im nicht bestätigten Zustand befindlich angesehen werden.

**4.** Verfahren zum Senden von Daten nach einem der Ansprüche 1 bis 3, **dadurch gekennzeichnet, dass** es für einen gegebenen Bestätigungsblock einen zweiten Deaktivierungsschritt (12) des Verzögerungsgliedes umfasst, wenn der Sender (1) eine kumulierte Bestätigungsmeldung empfängt, die mindestens die Datenpakete des besagten Blocks umfasst, wobei diese Meldung angibt, dass die Datenpakete des Blocks sich im bestätigten Zustand befinden.

**5.** Verfahren zum Senden von Daten nach einem der Ansprüche 1 bis 4, **dadurch gekennzeichnet, dass** es für einen gegebenen Bestätigungsblock einen dritten Deaktivierungsschritt (12) des Verzögerungsglieds aufweist, wenn der Sender (1) eine mindestens den erwähnten Bestätigungsblock umfassende Bestätigungsmeldung empfängt.

**6.** Verfahren zum Senden von Daten nach Anspruch 5, **dadurch gekennzeichnet, dass** es beim Empfang der Bestätigungsmeldung durch den Sender (1) einen Schritt zum Analysieren dieser Bestätigungsmeldung einsetzt, um den bestätigten bzw. nicht bestätigten Zustand eines jeden Datenpakets des Blocks zu bestimmen.

7. Verfahren zum Senden von Daten nach einem der Ansprüche 3 bis 6, **dadurch gekennzeichnet, dass** es am Ende eines der Deaktivierungsschritte des Verzögerungsgliedes, wobei mindestens ein Datenpaket des Blocks sich im nicht bestätigten Zustand befindet, einen Schritt zum Anordnen (14) von mindestens einigen der nicht bestätigten Datenpakete des Blocks in einer Warteschlange zum erneuten Senden einsetzt.

8. Verfahren zum Senden von Daten nach einem der Ansprüche 6 oder 7, **dadurch gekennzeichnet, dass** es am Ende des Schrittes zum Analysieren einen Schritt zum Prüfen des Vorhandenseins von mindestens einem bestätigten Datenpaket des Blocks in der Warteschlange zum erneuten Senden einsetzt und, dass es, wenn das Vorhandensein von mindestens einem bestätigten Datenpaket des Blocks in der Warteschlange zum erneuten Senden bestätigt wird, einen Schritt zum Eliminieren (30) des bestätigten Datenpakets bzw. der bestätigten Datenpakete aus der Warteschlange zum erneuten Senden einsetzt.

9. Verfahren zum Senden von Daten nach einem der Ansprüche 7 oder 8, **dadurch gekennzeichnet, dass** es mindestens einen Schritt zum erneuten Senden (15) des Datenpakets oder der Datenpakete des Blocks, welche in der Warteschlange zum erneuten Senden angeordnet sind und einen zweiten Aktivierungsschritt des Verzögerungsgliedes des Blocks beim erneuten Senden des ersten Datenpakets der in der Warteschlange zum erneuten Senden angeordneten Blocks einsetzt.

10. Verfahren zum Senden von Daten nach einem der Ansprüche 1 bis 9, **dadurch gekennzeichnet, dass** es ein Protokoll des Typs ARQ ("Automatic Repeat Request" in Englisch) einsetzt.

11. Verfahren zum Senden von Daten nach einem der Ansprüche 1 bis 10, **dadurch gekennzeichnet, dass** der Zeitstempel bzw. die Zeitinformation aktiviert wird, wenn der Sender (1) das assoziierte Datenpaket sendet.

12. Verfahren zum Senden von Daten nach einem der Ansprüche 7 bis 11, **dadurch gekennzeichnet, dass** der Schritt zum Anordnen einen vorhergehenden Unterschritt zur Auswahl (13; 20, 21, 22; 31; 40, 41, 42, 43) der in der Warteschlange zum erneuten Senden anzuordnenden Datenpakete als Funktion von mindestens einem vorgegebenen Auswahlkriterium aufweist.

13. Verfahren zum Senden von Daten nach Anspruch 12, **dadurch gekennzeichnet, dass** das Auswahlkriterium mindestens eine Information aus der Gruppe berücksichtigt, die folgendes umfasst:

 - den Wert des Zeitstempels bzw. Zeitinformation, der bzw. die mit einem nicht bestätigten Datenpaket des Blocks assoziiert ist;
 - die ARQ-Klasse des Empfängers (2).

14. Verfahren zum Senden von Daten nach einem der Ansprüche 12 oder 13, **dadurch gekennzeichnet, dass** der Unterschritt zur Auswahl (13) das Wählen des nicht bestätigten Datenpakets bzw. der nicht bestätigten Datenpakete des Blocks ermöglicht, der oder die mit einem Zeitstempel bzw. einer Zeitinformation assoziiert ist oder sind, dessen bzw. deren Wert größer oder gleich der maximalen vorgegebenen Zeitdauer ist.

15. Verfahren zum Senden von Daten nach einem der Ansprüche 7 bis 14, **dadurch gekennzeichnet, dass** der Schritt zum Anordnen (14) ferner für jedes der gewählten Datenpakete einen Schritt zum Deaktivieren der assoziierten Anordnung zum Festlegen von Datum und Uhrzeit einsetzt.

16. Verfahren zum Senden von Daten nach einem der Ansprüche 9 oder 12, **dadurch gekennzeichnet, dass**, wenn alle nicht bestätigten Pakete des Blocks beim Unterschritt der Auswahl (13) gewählt wurden, das Verzögerungsglied beim zweiten Aktivierungsschritt den folgenden Wert V(T) annimmt:

$$V(T) = t(\text{Aktivierung}) + d_{max},$$

wobei t(Aktivierung) der laufende Zeitwert beim zweiten Aktivierungsschritt ist und $d_{max}$ die vorgegebene maximale Zeitdauer ist und, **dass** der bzw. die mit jedem Datenpaket des in der Warteschlange angeordneten Blocks assoziierte Zeitstempel bzw. Zeitinformation aktiviert ist und den laufenden Zeitwert des erneuten Sendens des Datenpakets annimmt.

17. Verfahren zum Senden von Daten nach einem der Ansprüche 14 bis 16, **dadurch gekennzeichnet, dass** am Ende des ersten Deaktivierungsschrittes des Verzögerungsgliedes,
wenn mindestens ein nicht bestätigtes Datenpaket des mit einem Zeitstempel bzw. einer Zeitinformation, deren Wert geringer ist als die maximale vorgegebene Zeitdauer ist, assoziierten Blocks im Verlauf des Unterschrittes der Auswahl (13) nicht gewählt wurde,
es einen dritten Aktivierungsschritt des Verzögerungsgliedes des erwähnten Blocks einsetzt, so dass dieses Verzögerungsglied den folgenden Wert V(T) annimmt:

$$V(T) = V(\text{Übergang}) + (\text{Zeitstempel bzw. Zeitinformation}[i] - \text{Zeitstempel}$$

$$\text{bzw. Zeitinformation}[j]),$$

wobei V(Übergang) der Wert des Verzögerungsgliedes beim Übergangsschritt des Verzögerungsgliedes in den deaktivierten Zustand ist,
Zeitstempel bzw. Zeitinformation[j] der größte Wert des bzw. der mit den nicht bestätigten Datenpaketen des beim Unterschritt der Auswahl (13) gewählten Blocks assoziierten Zeitstempels bzw. Zeitinformation ist und
Zeitstempel bzw. Zeitinformation[i] der größte Wert des bzw. der mit den nicht bestätigten Datenpaketen des beim Unterschritt der Auswahl (13) nicht gewählten Blocks assoziierten Zeitstempels bzw. Zeitinformation ist.

18. Verfahren zum Senden von Daten nach Anspruch 6 und nach einem der Ansprüche 1 bis 17, **dadurch gekennzeichnet, dass** dieses Verfahren am Ende des Schrittes zum Analysieren der Bestätigungsmetdung für jedes der bestätigten Datenpakete aus dem Block einen Deaktivierungsschritt des bzw. der assoziierten Zeitstempels bzw. Zeitinformation einsetzt.

19. Verfahren zum Senden von Daten nach einem der Ansprüche 13 bis 18, **dadurch gekennzeichnet, dass** am Ende des dritten Deaktivierungsschrittes des Verzögerungsgliedes,
wenn mindestens ein nicht bestätigtes Datenpaket des Blocks im Verlaufe des Unterschrittes zum Analysieren (13) nicht als Funktion eines mit der ARQ-Klasse des Empfängers (2) zusammenhängenden Entscheidungskriteriums gewählt wurde,
es einen vierten Deaktivierungsschritt des Verzögerungsgliedes des Blocks einsetzt, so dass dieses Verzögerungsglied den folgenden Wert V(T) annimmt:

$$V(T) = V(\text{Übergang}) + (d_{max} - (t - \text{Zeitstempel bzw. Zeitinformation}[i])),$$

wobei V(Übergang) der Wert des Verzögerungsgliedes beim Übergangsschritt des Verzögerungsgliedes in den deaktivierten Zustand ist,
$d_{max}$ die vorgegebene maximale Zeitdauer ist,
t der laufende Zeitwert ist und,
Zeitstempel bzw. Zeitinformation[i] der größte Wert des bzw. der mit den nicht bestätigten Datenpaketen des beim Unterschritt der Auswahl nicht gewählten Blocks assoziierten Zeitstempels bzw. Zeitinformation ist.

20. Sender (1) für Daten, die an mindestens einen Empfänger (2) gesendet werden
in Form von Paketen von mindestens einer Dateneinheit, wobei jedes dieser Datenpakete mit einem Identifikationskennzeichen des erwähnten Pakets assoziiert ist;
der Empfänger (2) periodisch eine Bestätigungsmeldung an den Sender (1) sendet, wobei diese Meldung mindestens einen mit einer vorgegebenen Zahl von aufeinanderfolgende Identifikationskennzeichen aufweisenden Datenpaketen assoziierten Bestätigungsblock umfasst, um dem Sender (1) in selektiver Weise einen Bestätigungszustand (bestätigt oder nicht bestätigt) für jedes Datenpaket des Blocks zu melden,
wobei der Sender (1) Mittel zum Assoziieren von mindestens einem Verzögerungsglied mit mindestens einigen der genannten Bestätigungsblöcke umfasst,
**dadurch gekennzeichnet, dass** es ferner mindestens Mittel zum Festlegen eines Zeitstempels bzw. einer Zeitinformation aufweist, mit denen eine Vorrichtung zum Festlegen eines Zeitstempels bzw. einer Zeitinformation mit mindestens einigen Datenpaketen im nicht bestätigten Zustand assoziiert werden kann.

21. System zum Übertragen von Daten zwischen mindestens einem Sender (1) und mindestens einem Empfänger (2) in Form von Paketen von mindestens einer Dateneinheit, wobei jedes dieser Datenpakete mit einem Identifikationskennzeichen des erwähnten Pakets assoziiert ist;

der Empfänger (2) periodisch eine Empfangsbestätigungsmeldung an den Sender (1) sendet, wobei diese Meldung mindestens einen mit einer vorgegebenen Zahl von aufeinanderfolgende Identifikationskennzeichen aufweisenden Datenpaketen assoziierten Bestätigungsblock umfasst, um dem Sender (1) in selektiver Weise einen Bestätigungszustand (bestätigt oder nicht bestätigt) für jedes Datenpaket des Blocks zu melden,

wobei das System Mittel zum Assoziieren von mindestens einem Verzögerungsglied mit mindestens einigen der genannten Bestätigungsblöcke umfasst,

**dadurch gekennzeichnet, dass** es ferner mindestens Mittel zum Festlegen eines Zeitstempels bzw. einer Zeitinformation aufweist, mit denen eine Vorrichtung zum Festelegen eines Zeitstempels bzw. einer Zeitinformation mit mindestens einigen Datenpaketen im nicht bestätigten Zustand assoziiert werden kann.

ASSOCIATION D'AU MOINS UN
TEMPORISATEUR A AU MOINS
CERTAINS BLOCS D'ACQUITTEMENT — 10

ACTIVATION DU TEMPORISATEUR
SUR TRANSMISSION DU PREMIER
PDU NON-ACQUITTÉ DU BLOC — 11

DESACTIVATION DU TEMPORISATEUR
- APRES RTT MAX ;
OU
- APRES RECEPTION D'UN ACQUITTEMENT
D'AU MOINS CERTAINS PDUs DU BLOC — 12

SELECTION DE PDUs
A RETRANSMETTRE — 13

POSITIONNEMENT DE PDUs A
RETRANSMETTRE DANS UNE FILE
D'ATTENTE DE RETRANSMISSION — 14

RETRANSMISSION DES PDUs
DE LA FILE — 15

Fig. 1

1

2

Emetteur ARQ

Récepteur ARQ

PDU 0 1 2 3 4 5 6 7
Acquittement | 0 0 0 0 0 0 0 0 |

t0

PDU(0)
PDU(1)
PDU(2)
PDU(3)
PDU(4)

$T_0=t_0+6+\Delta_0$

f0

t1

PDU(5)
PDU(6)
PDU(7)
PDU(8)

f1

0 1 2 3 4 5 6 7
Acquittement | 1 0 0 0 1 0 1 1 |
File={1,2,3,5}

BMB0=10001011

$T_1=t_1+6+\Delta_1$

t2

PDU(1)
PDU(2)

f2

File={3,5}

$T_0=t_2+6+\Delta_2$

BMB0=11101011

t3

0 1 2 3 4 5 6 7
Acquittement | 1 1 1 0 1 0 1 1 |

PDU(3)
PDU(5)
PDU(9)
PDU(10)

$T_0=t_3+6+\Delta_3$

f3

t4

PDU(11)
PDU(12)

f4

## Fig. 2

BMB0=11111111 , BMB1=11100000

t5

PDU(13)
PDU(14)
PDU(15)

f5

PDU 8 9 10 11 12 13 14 15
Acqu | 0 0 0 0 0 0 0 0 |
File={8,9,10,11,12,13,14,15}

t'5
PDU(8)

$T_1=t_5+6+\Delta_5$

t6

File={10 ... 15} U {3,5}
={3,5, 10,11,12,13,14,15}

PDU(9)
PDU(3)
PDU(5)
PDU(10)

f6

PDU 0        7 8        15
Acqu | 11111111 | 11100110 |
File={11,12,13,14,15}
d'où File={11,12,15}

BMB0=11111111 , BMB1=11100110

t7

PDU(11)
PDU(12)
PDU(15)

f7

$T_1=t_7+6+\Delta$

t8

PDU 0        7 8        15
Acqu | 11111111 | 11111111 |
File={ }

BMB1=11111111

Temps(ms)

Fig. 3

## Fig. 4a

Emetteur ARQ   1

Récepteur ARQ   2

$t_0$

PDU(0)

$T_0=t_0+10+\Delta$

$f_0$

$t_1$

$f_1$

$t_2$

PDU(1)
PDU(2)
PDU(3)

$f_2$

$t_3$

PDU(4)
PDU(5)
PDU(6)
PDU(7)

$f_3$

$t_4$

Détermination en fonction de Hi des PDU(i) à positionner en file d'attente de retransmission

$f_4$

PDU  0 1 2 3 4 5 6 7
Acquit. 0 0 0 0 0 0 0 0
Hi  0 2 2 2 3 3 3 3

BMB0=11001101

$t_5$
$t'_5$

File={ 0 }   $T_0=t'_5+4$
Hi  / 2 2 2 3 3 3 3

$f_5$

Détermination en fonction de Hi des PDU(i) à positionner en file d'attente de retransmission

$t_6$

Hi  6 2 2 2 3 3 3 3

PDU(0)

BMB0

File={1,2,3}
Hi  6 / / / 3 3 3 3

$t_7$
$t'_7$

$f_6$

Détermination en fonction de Hi des PDU(i) à positionner en file d'attente de retransmission

PDU(1)
PDU(2)

$T_0=t'_7+2$
File={3}
Hi  6 7 7 / 3 3 3 3

$f_7$

Détermination en fonction de Hi des PDU(i) à positionner en file d'attente de retransmission

$t_8$
$t'_8$

File={3,4,5,6,7}

PDU(3)

$T_0=t'_8+6$

$f_8$

Temps(ms)

Fig. 4b

1

Emetteur ARQ

2

Récepteur ARQ

PDU 0 1 2 3 4 5 6 7
Acquit. | 0 0 0 0 0 0 0 0 |
Hi / / / / / / / /

t0

PDU(0)
PDU(1)
PDU(2) ✕
PDU(3)
PDU(4) ✕

f0

40

$T_0 = t_0 + 6 + \Delta$

Hi 0 0 0 0 0 / / /

Hi 0 0 0 0 0 1 1 1

t1

PDU(5)
PDU(6)
PDU(7) ✕

f1

Détermination en fonction de Hi et de $d_{RX}$ des PDU(i) à positionner en file d'attente de retransmission

PDU 0 1 2 3 4 5 6 7
Acquit. | 1 0 1 0 1 0 0 0 |
Hi / / / / / 1 1 1

t'1

BMB0 = 10101000

t2

PDU(1) ✕

f2

$T_0 = t'_1 + 6$

Hi / 2 / / / 1 1 1
File = { 3 }

t3

PDU(3)

f3

41

Détermination en fonction de Hi des PDU(i) à positionner en file d'attente de retransmission

Hi / 2 / 3 / 1 1 1
File = { }

t4

BMB0 = 10111101 ✕

f4

Hi / 2 / 3 / / / /
File = {5,6,7}

t'4

t5

$T_0 = t'_4 + 2$

42

Détermination en fonction de Hi des PDU(i) à positionner en file d'attente de retransmission

Hi / / / 3 / / / /
File = {5,6,7,1}

t'5

t6

$T_0 = t'_5 + 2$

PDU(5)
PDU(6)
PDU(7)
PDU(1)

f5

Hi / 6 / 3 / 6 6 6
File = { }

f6

Acquit. | 1 0 1 1 1 1 0 1 |
Hi / 6 / / / 6 /

t'6

BMB0 = 10111101

43

Détermination en fonction de Hi et de $d_{RX}$ des PDU(i) à positionner en file d'attente de retransmission

$T_0 = t'_6 + 6$

t7

BMB0 = 11111111

f7

Acquit. | 1 1 1 1 1 1 1 1 |
Hi / / / / / / / /

t8

Fig. 5

Temps(ms)